# EUROPEAN PATENT APPLICATION

(11) **EP 4 395 214 A1**
(43) Date of publication of application: **03.07.2024**
(21) Application number: 22866767.1
(22) Date of filing: 09.09.2022
(51) Int. Cl.: H04L 5/00, H04W 28/16

(54) **PHYSICAL LAYER PROTOCOL DATA UNIT TRANSMISSION METHOD AND APPARATUS**

(30) Priority: 11.09.2021 CN 202111064978
(71) Applicant: Huawei Technologies Co., Ltd., Shenzhen, Guangdong 518129 (CN)
(72) Inventor: GAN, Ming, Shenzhen, Guangdong 518129 (CN); LU, Yuxin, Shenzhen, Guangdong 518129 (CN); YU, Jian, Shenzhen, Guangdong 518129 (CN); LI, Yunbo, Shenzhen, Guangdong 518129 (CN); YANG, Xun, Shenzhen, Guangdong 518129 (CN); LIU, Chenchen, Shenzhen, Guangdong 518129 (CN); GONG, Bo, Shenzhen, Guangdong 518129 (CN); LI, Yiqing, Shenzhen, Guangdong 518129 (CN)
(74) Representative: Isarpatent
(86) International application number: PCT/CN2022/118170
(87) International publication number: WO 2023/036306

(57) **Abstract**

Embodiments of this application provide a physical layer protocol data unit transmission method and an apparatus, to reduce spectrum resources wasting that is caused because a receive end communication apparatus does not send a physical layer protocol data unit when there is at least one sub-channel whose channel state is busy in sub-channels corresponding to a resource unit indicated by a resource unit allocation subfield. The method includes: A first communication apparatus may receive a trigger frame that is for indicating a first resource unit allocated to the first communication apparatus, and sends a physical layer protocol data unit PPDU on a part of or all of the first resource unit, where the first resource unit is a resource unit whose quantity of tones is greater than 996; or the first resource unit is a multiple resource unit MRU, and the MRU includes at least one resource unit whose quantity of tones is greater than or equal to 996.

## Description

This application claims priority to Chinese Patent Application No. 202111064978.0, filed with the China National Intellectual Property Administration on September 11, 2021, and entitled "PHYSICAL LAYER PROTOCOL DATA UNIT TRANSMISSION METHOD AND APPARATUS", which is incorporated herein by reference in its entirety.

### TECHNICAL FIELD

This application relates to the field of communication technologies, and in particular, to a physical layer protocol data unit transmission method and an apparatus.

### BACKGROUND

An existing wireless local area network (wireless local area network, WLAN) communication system, starting from the 802.11 a/b/ g standard, has developed for a plurality of generations, for example, the 802.11n standard, the 802.11ac standard, the 802.11ax standard, and the 802.11be standard. A scheduled uplink transmission method based on a trigger frame (trigger frame) is introduced in the 802.11ax standard and the 802.11be standard. In the method, a transmit end communication apparatus may send a trigger frame to one or more receive end communication apparatuses, to schedule the one or more receive end communication apparatuses to send a physical layer protocol data unit (physical layer protocol data unit, PPDU), to perform uplink transmission.

The trigger frame may include a resource unit allocation subfield that is for indicating a resource unit (resource unit, RU) allocated by the transmit end communication apparatus to the receive end communication apparatus and an indication field that is for indicating the receive end communication apparatus to perform carrier sense. The receive end communication apparatus may perform, based on the trigger frame, carrier sense on one or more sub-channels on which the resource unit indicated by the resource unit allocation subfield is located. When channel states of all sub-channels on which the resource unit indicated by the resource unit allocation subfield is located are idle, the receive end communication apparatus may send the PPDU through the sub-channels. Otherwise, when a channel state of at least one sub-channel in the sub-channels corresponding to the resource unit indicated by the resource unit allocation subfield is busy, the receive end communication apparatus does not send the PPDU, to avoid interference to other transmission.

However, when the channel state of the at least one sub-channel in the sub-channels corresponding to the resource unit indicated by the resource unit allocation subfield is busy, even if there is another sub-channel whose channel state is idle in the sub-channels corresponding to the resource unit indicated by the resource unit allocation subfield, the receive end communication apparatus does not send the PPDU, causing a waste of spectrum resources.

### SUMMARY

In view of this, this application provides a physical layer protocol data unit transmission method and an apparatus, to improve a technical problem of wasting spectrum resources that is caused because a receive end communication apparatus does not send a physical layer protocol data unit when there is at least one sub-channel whose channel state is busy in sub-channels corresponding to a resource unit indicated by a resource unit allocation subfield.

According to a first aspect, an embodiment of this application provides a physical layer protocol data unit transmission method. The method may include: A first communication apparatus receives a trigger frame that is for indicating an allocated first resource unit, and sends a physical layer protocol data unit PPDU on a part of or all of the first resource unit, where the first resource unit is a resource unit whose quantity of tones is greater than 996; or the first resource unit is a multiple resource unit MRU, and the MRU includes at least one resource unit whose quantity of tones is greater than or equal to 996.

According to the first aspect, the first communication apparatus may send the PPDU on the part of or all of the first resource unit when there is a sub-channel whose channel state is idle. This avoids a waste of spectrum resources and improves spectrum utilization.

In a possible design, the PPDU includes first indication information, and the first indication information is for indicating that the PPDU is sent on a part of resource units in the first resource unit, or the first indication information is for indicating that the PPDU is sent on all resource units in the first resource unit.

According to this possible design, the first communication apparatus may further include the first indication information in the PPDU, to indicate whether the first communication apparatus transmits the PPDU on the part of or all of the first resource unit. In comparison with RU transmission indication information, this may reduce a quantity of bits and reduce signaling redundancy.

In a possible design, when the first resource unit is a resource unit whose quantity of tones is greater than 996, a quantity of physical layer service data units PSDUs in the PPDU sent on the part of or all of the first resource unit is less than or equal to a first quantity, and the first quantity is a quantity of 996-tone resource units 996-tone RUs in the first resource unit; or when the first resource unit is the MRU, a quantity of PSDUs in the PPDU sent on all of the first resource unit is equal to a second quantity, the second quantity is a sum of a third quantity and a fourth quantity, the third quantity is a quantity of resource units whose quantity of tones is less than 996 in the MRU, and the fourth quantity is a quantity of 996-tone RUs in the MRU; or when the first resource unit is the MRU, a quantity of PSDUs in the PPDU sent on the part of the first resource unit is less than or equal to a fourth quantity, and the fourth quantity is a quantity of 996-tone RUs in the MRU.

According to this possible design, before sending the PPDU, the first communication apparatus may prepare PSDUs of a plurality of versions in advance based on the first resource unit, so that the PSDUs adapted to the part of or all of the first resource unit are subsequently sent on the part of or all of the first resource unit.

In a possible design, universal signal U-SIG fields of the PPDU within a same segment of 80 MHz are the same, and universal signal U-SIG fields of the PPDU within different segments of 80 MHz are the same.

According to this possible design, the U-SIG fields of the PPDU sent by the first communication apparatus within a same segment of 80 MHz are the same, so that it may be ensured that a second communication apparatus performs combined receiving on different 20 MHz sub-channels within the segment of 80 MHz. This improves reliability. In addition, the U-SIG fields of the PPDU sent by the first communication apparatus within different segments of 80 MHz may also be the same, so that complexity of preparing a preamble by the first communication apparatus may be reduced. This simplifies a sending procedure.

In a possible design, when the part of resource units in the first resource unit are idle and a quantity of tones of the part of resource units is greater than or equal to 996, the first communication apparatus sends the PPDU on a resource unit whose quantity of tones is N multiplied by 996 in the part of resource units, where N is greater than or equal to 1.

According to the possible design, the first communication apparatus may send the PPDU on the resource unit whose quantity of tones is N multiplied by 996 in the part of resource units, to avoid that the U-SIG fields in different segments of 20 MHz within the segment of 80 MHz have different content.

In a possible design, the first indication information is a preset bit value; or the first indication information is a default value of a special user information field in the trigger frame.

According to this possible design, the first indication information may be the preset bit value, or may be the default value. A plurality of feasible solutions are provided for the first indication information.

In a possible design, the first indication information is further for indicating a quantity of segments of 80 MHz corresponding to the resource unit for sending the PPDU.

According to this possible design, the first indication information may be further for indicating the quantity of segments of 80 MHz corresponding to the resource unit for sending the PPDU, so that the second communication apparatus receives the PPDU on the first resource unit based on the first indication information, and power consumption of the second communication apparatus may be reduced.

In a possible design, the first indication information is located in the universal signal U-SIG field of the PPDU.

According to this possible design, the first indication information is located in the U-SIG field of the PPDU. A feasible solution is provided for setting the first indication information.

In a possible design, the universal signal U-SIG field of the PPDU further includes one or both of the following: second indication information and third indication information; the second indication information is for indicating a modulation and coding scheme MCS, and the MCS is determined based on the PPDU sent on the part of or all of the first resource unit; and the third indication information is for indicating transmit power, and the transmit power is determined based on the PPDU sent on the part of or all of the first resource unit.

According to this possible design, when the first communication apparatus sends the PPDU on the part of resource units in the first resource unit, the MCS actually used by the first communication apparatus to send the PPDU may be different from an MCS allocated by the second communication apparatus to the first communication apparatus. In this case, the first communication apparatus may indicate, to the second communication apparatus by using the second indication information, the MCS actually used to send the PPDU. When the first communication apparatus sends the PPDU on the part of resource units in the first resource unit, the transmit power actually used by the first communication apparatus to send the PPDU may be different from transmit power allocated by the second communication apparatus to the first communication apparatus. In this case, the first communication apparatus may indicate, to the second communication apparatus by using the third indication information, the transmit power actually used to send the PPDU.

In a possible design, the trigger frame includes fourth indication information, and the fourth indication information is for indicating that the PPDU is allowed to be sent on the part of resource units in the first resource unit.

According to this possible design, the trigger frame may further include the fourth indication information. When the fourth indication information is for indicating that the PPDU is allowed to be sent on the part of resource units in the first resource unit, the first communication apparatus may send the PPDU on the part of resource units in the first resource unit.

In a possible design, when the fourth indication information is for indicating that the PPDU is allowed to be sent on the part of resource units in the first resource unit, the first resource unit is not for scheduling multiple user multiple input multiple output MU-MIMO transmission.

According to this possible design, when the fourth indication information is for indicating that the first communication apparatus is allowed to send the PPDU on the part of resource units in the first resource unit, the first resource unit is not for scheduling the MU-MIMO transmission. Alternatively, it may be described as follows: If the first resource unit is for scheduling the MU-MIMO transmission, the first communication apparatus is not allowed to send the PPDU on the part of resource units in the first resource unit.

According to a second aspect, an embodiment of this application provides a physical layer protocol data unit transmission method. The method includes: A second communication apparatus sends a trigger frame, and receives a PPDU on a part of or all of a first resource unit, where the trigger frame is for indicating the allocated first resource unit, and the first resource unit is a resource unit whose quantity of tones is greater than 996; or the first resource unit is a multiple resource unit MRU, and the MRU includes at least one resource unit whose quantity of tones is greater than or equal to 996.

According to the second aspect, the second communication apparatus may receive the PPDU on the part of or all of the first resource unit when there is a sub-channel whose channel state is idle. This avoids a waste of spectrum resources and improves spectrum utilization.

In a possible design, the PPDU includes first indication information, and the first indication information is for indicating that the PPDU is sent on a part of resource units in the first resource unit, or the first indication information is for indicating that the PPDU is sent on all resource units in the first resource unit.

According to this possible design, the PPDU may further include the first indication information, to indicate whether the first communication apparatus transmits the PPDU on the part of or all of the first resource unit. In comparison with the RU transmission indication information, this may reduce a quantity of bits and reduce signaling redundancy.

In a possible design, when the first resource unit is a resource unit whose quantity of tones is greater than 996, a quantity of physical layer service data units PSDUs in the PPDU received on the part of or all of the first resource unit is less than or equal to a first quantity, and the first quantity is a quantity of 996-tone resource units 996-tone RUs in the first resource unit; or when the first resource unit is the MRU, a quantity of PSDUs in the PPDU received on all of the first resource unit is equal to a second quantity, the second quantity is a sum of a third quantity and a fourth quantity, the third quantity is a quantity of resource units whose quantity of tones is less than 996 in the MRU, and the fourth quantity is a quantity of 996-tone RUs in the MRU; or when the first resource unit is the MRU, a quantity of PSDUs in the PPDU received on the part of the first resource unit is less than or equal to a fourth quantity, and the fourth quantity is a quantity of 996-tone RUs in the MRU.

According to this possible design, before sending the PPDU, the first communication apparatus may prepare PSDUs of a plurality of versions in advance based on the first resource unit, so that the PSDUs adapted to the part of or all of the first resource unit are subsequently sent on the part of or all of the first resource unit.

In a possible design, universal signal U-SIG fields of the PPDU within a same 80 segment of MHz are the same, and universal signal U-SIG fields of the PPDU within different segments of 80 MHz are the same.

According to this possible design, the U-SIG fields of the PPDU sent by the first communication apparatus within a same segment of 80 MHz are the same, so that it may be ensured that a second communication apparatus performs combined receiving on different 20 MHz sub-channels within the segment of 80 MHz. This improves reliability. In addition, the U-SIG fields of the PPDU sent by the first communication apparatus within different segments of 80 MHz may also be the same, so that complexity of preparing a preamble by the first communication apparatus may be reduced. This simplifies a sending procedure.

In a possible design, when the part of resource units in the first resource unit are idle and a quantity of tones of the part of resource units is greater than or equal to 996, the PPDU is sent on a resource unit whose quantity of tones is N multiplied by 996 in the part of resource units, where N is greater than or equal to 1.

According to the possible design, the first communication apparatus may send the PPDU on the resource unit whose quantity of tones is N multiplied by 996 in the part of resource units, to avoid that the U-SIG fields in different segments of 20 MHz within the segment of 80 MHz have different content.

In a possible design, the first indication information is a preset bit value; or the first indication information is a default value of a special user information field in the trigger frame.

According to this possible design, the first indication information may be the preset bit value, or may be the default value. A plurality of feasible solutions are provided for the first indication information.

In a possible design, the first indication information is further for indicating a quantity of segments of 80 MHz corresponding to the resource unit for sending the PPDU.

According to this possible design, the first indication information may be further for indicating the quantity of segments of 80 MHz corresponding to the resource unit for sending the PPDU, so that the second communication apparatus receives the PPDU on the first resource unit based on the first indication information, and power consumption of the second communication apparatus may be reduced.

In a possible design, the first indication information is located in the universal signal U-SIG field of the PPDU.

According to this possible design, the first indication information is located in the U-SIG field of the PPDU. A feasible solution is provided for setting the first indication information.

In a possible design, the universal signal U-SIG field of the PPDU further includes one or both of the following: second indication information and third indication information; the second indication information is for indicating a modulation and coding scheme MCS, and the MCS is determined based on the PPDU sent on the part of or all of the first resource unit; and the third indication information is for indicating transmit power, and the transmit power is determined based on the PPDU sent on the part of or all of the first resource unit.

According to this possible design, when the first communication apparatus sends the PPDU on the part of resource units in the first resource unit, the MCS actually used by the first communication apparatus to send the PPDU may be different from an MCS allocated by the second communication apparatus to the first communication apparatus. In this case, the first communication apparatus may indicate, to the second communication apparatus by using the second indication information, the MCS actually used to send the PPDU. When the first communication apparatus sends the PPDU on the part of resource units in the first resource unit, the transmit power actually used by the first communication apparatus to send the PPDU may be different from transmit power allocated by the second communication apparatus to the first communication apparatus. In this case, the first communication apparatus may indicate, to the second communication apparatus by using the third indication information, the transmit power actually used to send the PPDU.

In a possible design, the trigger frame includes fourth indication information, and the fourth indication information is for indicating that the PPDU is allowed to be sent on the part of resource units in the first resource unit.

According to this possible design, the trigger frame may further include the fourth indication information. When the fourth indication information is for indicating that the PPDU is allowed to be sent on the part of resource units in the first resource unit, the first communication apparatus may send the PPDU on the part of resource units in the first resource unit.

In a possible design, when the fourth indication information is for indicating that the PPDU is allowed to be sent on the part of resource units in the first resource unit, the first resource unit is not for scheduling multiple user multiple input multiple output MU-MIMO transmission.

According to this possible design, when the fourth indication information is for indicating that the first communication apparatus is allowed to send the PPDU on the part of resource units in the first resource unit, the first resource unit is not for scheduling the MU-MIMO transmission. Alternatively, it may be described as follows: If the first resource unit is for scheduling the MU-MIMO transmission, the first communication apparatus is not allowed to send the PPDU on the part of resource units in the first resource unit.

According to a third aspect, an embodiment of this application provides a communication apparatus. The communication apparatus includes a transceiver module. The transceiver module is configured to receive a trigger frame that is for indicating an allocated first resource unit, and is further configured to send a physical layer protocol data unit PPDU on a part of or all of the first resource unit, where the first resource unit is a resource unit whose quantity of tones is greater than 996; or the first resource unit is a multiple resource unit MRU, and the MRU includes at least one resource unit whose quantity of tones is greater than or equal to 996.

It should be noted that for specific descriptions of the PPDU in the third aspect, refer to related descriptions of the PPDU in the physical layer protocol data unit transmission method provided in any one of the first aspect or the possible designs of the first aspect. For a specific implementation of the communication apparatus in the third aspect, refer to a behavior function of the first communication apparatus in the physical layer protocol data unit transmission method provided in any one of the first aspect or the possible designs of the first aspect. Details are not described again.

According to a fourth aspect, an embodiment of this application provides a communication apparatus. The communication apparatus includes a transceiver module. A processing module is configured to send a trigger frame, and is further configured to receive a PPDU on a part of or all of a first resource unit, where the trigger frame is for indicating the allocated first resource unit, and the first resource unit is a resource unit whose quantity of tones is greater than 996; or the first resource unit is a multiple resource unit MRU, and the MRU includes at least one resource unit whose quantity of tones is greater than or equal to 996.

It should be noted that for specific descriptions of the PPDU in the fourth aspect, refer to related descriptions of the PPDU in the physical layer protocol data unit transmission method provided in any one of the second aspect or the possible designs of the second aspect. For a specific implementation of the communication apparatus in the fourth aspect, refer to a behavior function of the second communication apparatus in the physical layer protocol data unit transmission method provided in any one of the second aspect or the possible designs of the second aspect. Details are not described again.

According to a fifth aspect, an embodiment of this application provides a communication apparatus. The communication apparatus includes a processor and a transceiver that is internally connected to and communicates with the processor. The transceiver is configured to receive a trigger frame. The processor is configured to generate a PPDU. The transceiver is further configured to send the PPDU.

It should be noted that the communication apparatus provided in the fifth aspect is configured to perform the method according to any one of the first aspect or the possible implementations of the first aspect. For specific details, refer to descriptions of any one of the first aspect or the possible implementations of the first aspect. Details are not described herein again.

According to a sixth aspect, an embodiment of this application provides a communication apparatus. The communication apparatus includes a processor and a transceiver that is internally connected to and communicates with the processor. The processor is configured to generate a trigger frame. The transceiver is configured to send the trigger frame, and is further configured to receive a PPDU.

It should be noted that the communication apparatus provided in the sixth aspect is configured to perform the method according to any one of the second aspect or the possible implementations of the second aspect. For specific details, refer to descriptions of any one of the second aspect or the possible implementations of the second aspect. Details are not described herein again.

According to a seventh aspect, an embodiment of this application provides a communication apparatus. The communication apparatus includes a processing circuit and an input/output interface that is internally connected to and communicates with the processing circuit. The input/output interface is configured to receive a trigger frame. The processing circuit is configured to generate a PPDU. The input/output interface is further configured to send the PPDU.

It should be noted that the communication apparatus provided in the seventh aspect is configured to perform the method according to any one of the first aspect or the possible implementations of the first aspect. For specific details, refer to descriptions of any one of the first aspect or the possible implementations of the first aspect. Details are not described herein again.

According to an eighth aspect, an embodiment of this application provides a communication apparatus. The communication apparatus includes a processing circuit and an input/output interface that is internally connected to and communicates with the processing circuit. The processing circuit is configured to generate a trigger frame. The input/output interface is configured to send the trigger frame, and is further configured to receive a PPDU.

It should be noted that the communication apparatus provided in the eighth aspect is configured to perform the method according to any one of the second aspect or the possible implementations of the second aspect. For specific details, refer to descriptions of any one of the second aspect or the possible implementations of the second aspect. Details are not described herein again.

According to a ninth aspect, an embodiment of this application provides a computer-readable storage medium, configured to store a computer program. The computer program includes instructions for performing the method according to any one of the first aspect or the possible implementations of the first aspect, or includes instructions for performing the method according to any one of the second aspect or the possible implementations of the second aspect.

According to a tenth aspect, an embodiment of this application provides a computer program product. The computer program product includes instructions for performing the method according to any one of the first aspect or the possible implementations of the first aspect, or includes instructions for performing the method according to any one of the second aspect or the possible implementations of the second aspect.

According to an eleventh aspect, an embodiment of this application provides a communication system. The communication system includes the first communication apparatus provided in the third aspect and the second communication apparatus provided in the fourth aspect.

### BRIEF DESCRIPTION OF DRAWINGS

FIG. 1 is a flowchart of a scheduled uplink transmission method according to an embodiment of this application;
FIG. 2 is a schematic diagram of a frame structure of a trigger frame according to an embodiment of this application;
FIG. 3 is a schematic diagram of a time sequence of PPDU transmission according to an embodiment of this application;
FIG. 4 is a schematic diagram of a communication system according to an embodiment of this application;
FIG. 5 is a schematic diagram of a structure of an access point device or a station device according to an embodiment of this application;
FIG. 6 is a flowchart of a physical layer protocol data unit transmission method according to an embodiment of this application;
FIG. 7 is a schematic diagram of an RU according to an embodiment of this application;
FIG. 8 is a schematic diagram of an RU according to an embodiment of this application;
FIG. 9 is a schematic diagram of an MRU according to an embodiment of this application;
FIG. 10 is a schematic diagram of an MRU according to an embodiment of this application;
FIG. 11 is a schematic diagram of an MRU according to an embodiment of this application;
FIG. 12 is a schematic diagram of an MRU according to an embodiment of this application;
FIG. 13 is a schematic diagram of an MRU according to an embodiment of this application;
FIG. 14A and FIG. 14B are a schematic diagram of a frame structure of a trigger frame according to an embodiment of this application;
FIG. 15 is a schematic diagram of a frame structure of a PPDU according to an embodiment of this application;
FIG. 16 is a schematic diagram of a time sequence of PPDU transmission according to an embodiment of this application;
FIG. 17 is a schematic diagram of a time sequence of PPDU transmission according to an embodiment of this application;
FIG. 18 is a schematic diagram of a time sequence of PPDU transmission according to an embodiment of this application;
FIG. 19 is a schematic diagram of a time sequence of PPDU transmission according to an embodiment of this application;
FIG. 20 is a schematic diagram of a communication apparatus according to an embodiment of this application; and
FIG. 21 is a schematic diagram of a communication apparatus according to an embodiment of this application.

### DESCRIPTION OF EMBODIMENTS

Before embodiments of this application are described, technical terms used in embodiments of this application are described.

A wireless local area network (wireless local area network, WLAN) communication system, starting from the 802.11a/b/g standard, has developed for a plurality of generations, for example, the 802.11n standard, the 802.11ac standard, the 802.11ax standard, and the 802.11be standard. Standards before the 802.11be standard, for example, the 802.11a/b/g standard, the 802.11n standard, the 802.11ac standard, and the 802.11ax standard, may also be collectively referred to as a non-802. 1 The standard.

Standards before the 802.11n standard, for example, 802.11a/b/g, may be collectively referred to as a non-high throughput (non-high throughput, non-HT) standard. The 802.11n standard may be referred to as a high throughput (high throughput, HT) standard. The 802.11ac standard may be referred to as a very high throughput (very high throughput, VHT) standard. The 802.11ax standard may be referred to as a high efficiency (high efficient, HE) standard, or may be referred to as the sixth generation of wireless fidelity (the sixth wireless fidelity, Wi-Fi 6) standard. The 802.11be standard may be referred to as an extremely high throughput (extremely high throughput, EHT) standard, or may be referred to as a Wi-Fi 7 standard.

In the WLAN communication system, communication may be performed between communication apparatuses by using a physical layer protocol data unit (physical protocol data unit, PPDU). The PPDU is a carrier sent at a physical layer, and may alternatively be described as a data packet, a packet, or a physical layer packet.

The communication apparatus may perform uplink transmission after obtaining a transmission opportunity (transmission opportunity, TXOP) through channel contention. For example, the communication apparatus may perform channel contention in an enhanced distributed channel access (enhanced distributed channel access, EDCA) manner, to obtain a transmission opportunity, and perform uplink transmission by using the transmission opportunity.

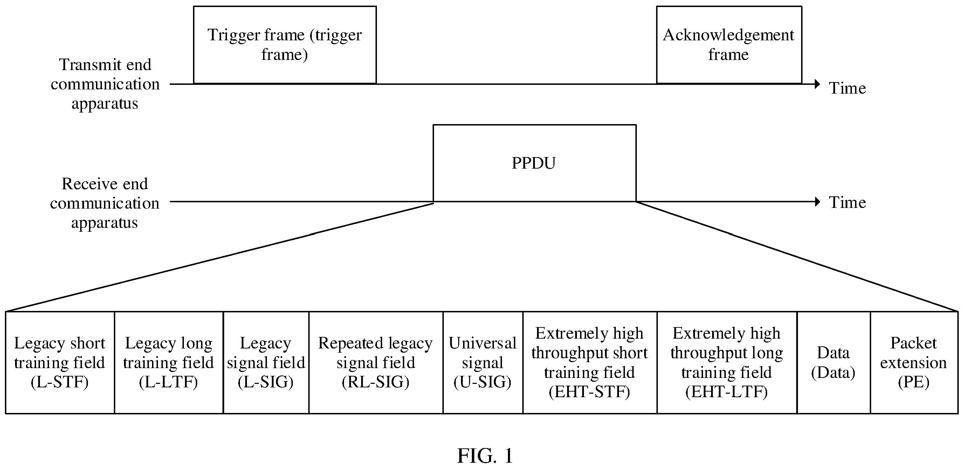

For example, a scheduled uplink transmission method based on a trigger frame (trigger frame) is introduced in the 802.11ax standard and the 802.11be standard. In the method, a transmit end communication apparatus may send a trigger frame to one or more receive end communication apparatuses, to schedule the one or more receive end communication apparatuses to send a PPDU, to implement uplink transmission. FIG. 1 is a flowchart of a scheduled uplink transmission method according to an embodiment of this application. As shown in FIG. 1, the method may include the following steps.

Step 1: A transmit end communication apparatus sends a trigger frame to one or more receive end communication apparatuses.

Specifically, the transmit end communication apparatus may send the trigger frame by using a transmission opportunity after obtaining the transmission opportunity through channel contention.

The trigger frame may be for scheduling the one or more receive end communication apparatuses to send a PPDU. For example, for the 802.11ax standard, the trigger frame may schedule the one or more receive end communication apparatuses to send a high efficiency trigger based PPDU (high efficient trigger based PPDU, HE TB PPDU). For the 802.11be standard, because the trigger frame in the 802.11be standard reuses a type and a subtype of the trigger frame in the 802.11ax standard, the trigger frame in the 802.11be standard may be simultaneously received and understood by one or more receive end communication apparatuses that use the 802.11ax standard and one or more receive end communication apparatuses that use the 802.11be standard, to trigger the one or more receive end communication apparatuses to send an HE TB PPDU, or trigger the one or more receive end communication apparatuses to send an extremely high throughput trigger based PPDU (extremely high throughput trigger based PPDU, EHT TB PPDU), or trigger a plurality of receive end communication apparatuses to send an HE TB PPDU and an EHT TB PPDU.

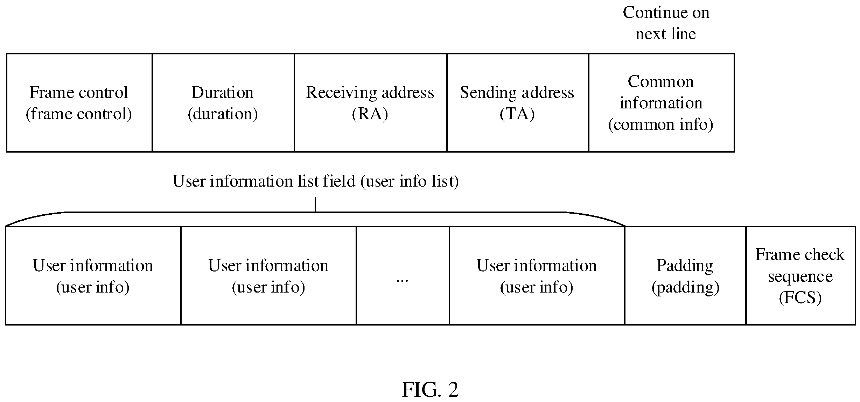

Specifically, the trigger frame may include a resource scheduling parameter and another parameter that are used by the one or more receive end communication apparatuses to send the PPDU. As shown in FIG. 2, the trigger frame may include a frame control (frame control) field, a duration (duration) field, a receiving address (receiving address, RA) field, a sending address (sending address, SA) field, a common information (common information) field, a user information list (user information list) field, a padding (padding) field, a frame check sequence (frame check sequence, FCS) field, and the like. For specific descriptions of the fields in the trigger frame, refer to corresponding descriptions of those in the 802.11ax standard or the 802. 1 The standard. Details are not described herein.

The common information field may include common information that needs to be read by each receive end communication apparatus. The user information list field may include one or more user information fields, and each user information field includes information that needs to be read by each receive end communication apparatus. The user information field may include fields such as an association identifier (association identification 12, AID 12) field and a resource unit allocation (resource unit allocation, RU allocation) subfield. The association identifier field may be for indicating an association identifier of a specific receive end communication apparatus, and the resource unit allocation subfield may be for indicating a location of an RU allocated to the receive end communication apparatus (namely, the receive end communication apparatus indicated by the AID 12).

Step 2: The receive end communication apparatus sends the PPDU based on the received trigger frame.

After receiving the trigger frame sent by the transmit end communication apparatus, the receive end communication apparatus may parse out, from the trigger frame, user information field that matches an AID of the receive end communication apparatus, and then send the PPDU on a resource unit indicated by a resource unit allocation subfield included in the user information field.

Specifically, for the 802.11ax standard, the receive end communication apparatus may send the HE TB PPDU on the resource unit indicated by the resource unit allocation subfield. For the 802.11be standard, the receive end communication apparatus may send the EHT TB PPDU on the resource unit indicated by the resource unit allocation subfield. For names and meanings of fields included in the HE TB PPDU, refer to corresponding descriptions of those in the 802.11ax standard. For names and meanings of fields included in the EHT TB PPDU, refer to corresponding descriptions of those in the 802.11be standard. Details are not described herein.

For example, an HE TB PPDU is used as an example. In the PPDU, a legacy short training (legacy short training field, L-STF) field to a high efficiency signal field A (high efficient signal field A, HE-SIG-A) field may be transmitted in a unit of 20 MHz. When a bandwidth is greater than 20 MHz, the L-STF field to the HE-SIG-A field may be duplicated and transmitted in a unit of 20 MHz. For the 802.11ax standard, the transmit end communication apparatus may allocate one resource unit to the receive end communication apparatus. The resource unit may be for transmitting the high efficiency short training field (high efficient short training field, HE-STF) to a data (Data) field.

For example, as shown in FIG. 1, an EHT TB PPDU is used as an example. In the PPDU, a legacy short training (legacy short training field, L-STF) field to a universal signal (universal SIG, U-SIG) field may be transmitted in a unit of 20 MHz. When a bandwidth is greater than 20 MHz, the L-STF field to the U-SIG field may be duplicated and transmitted in a unit of 20 MHz. For the 802.11be standard, the transmit end communication apparatus may allocate one resource unit or one predefined multiple resource unit (multiple resource unit, MRU) including a plurality of resource units to the receive end communication apparatus. The one or more resource units may be for transmitting an extremely high throughput short training (extremely high throughput short training field, EHT-STF) field to a data (Data) field.

Step 3: After receiving an uplink PPDU sent by the one or more receive end communication apparatuses, the transmit end communication apparatus returns an acknowledgment frame.

The uplink PPDU may include the PPDU sent by the one or more receive end communication apparatuses.

According to the scheduled uplink transmission method shown in FIG. 1, the trigger frame may further include an indication field that is for indicating the receive end communication apparatus to perform carrier sense. The receive end communication apparatus may perform, based on the trigger frame, carrier sense on one or more sub-channels on which the resource unit indicated by the resource unit allocation subfield is located. When channel states of all sub-channels on which the resource unit indicated by the resource unit allocation subfield is located are idle, the receive end communication apparatus may send the PPDU through the sub-channels. Otherwise, when a channel state of at least one sub-channel in the sub-channels corresponding to the resource unit indicated by the resource unit allocation subfield is busy, the receive end communication apparatus does not send the PPDU, to avoid interference to other transmission.

However, when the channel state of the at least one sub-channel in the sub-channels corresponding to the resource unit indicated by the resource unit allocation subfield is busy, even if there is another sub-channel whose channel state is idle in the sub-channels corresponding to the resource unit indicated by the resource unit allocation subfield, the receive end communication apparatus does not send the PPDU, causing a waste of spectrum resources.

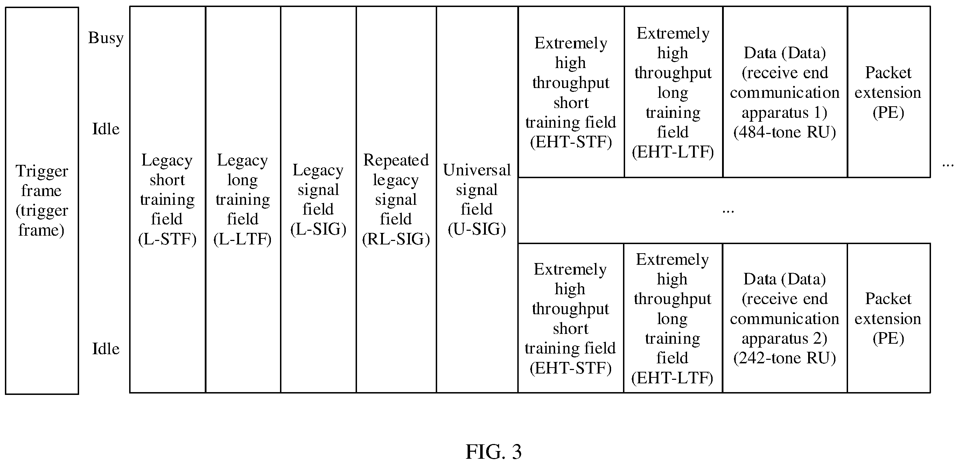

For example, as shown in FIG. 3, an example in which a resource unit allocated by the transmit end communication apparatus to a receive end communication apparatus 1 is a 484-tone resource unit (484-tone RU) is used. A frequency range corresponding to the 484-tone resource unit is 40 MHz, and two sub-channels whose bandwidths are 20 MHz may be included, for example, a sub-channel 1 and a sub-channel 2. Assuming that the receive end communication apparatus 1 performs carrier sense before transmitting the PPDU, and finds that a channel state of the sub-channel 1 is busy and a channel state of the sub-channel 2 is idle, the receive end communication apparatus 1 cannot transmit the PPDU on the 484-tone RU, causing a waste of spectrum resources.

In another example, as shown in FIG. 3, an example in which a resource unit allocated by the transmit end communication apparatus to a receive end communication apparatus 2 is a 242-tone resource unit (242-tone RU) is used. A frequency range corresponding to the 242-tone resource unit is 20 MHz, and one sub-channel whose bandwidth is 20 MHz may be included. Assuming that the receive end communication apparatus 2 performs carrier sense before transmitting the PPDU, and finds that a channel state of the sub-channel is idle, the receive end communication apparatus 2 may transmit the PPDU on the 242-tone RU. If the channel state of the sub-channel is busy, the receive end communication apparatus 2 cannot transmit the PPDU on the 242-tone RU.

To avoid a waste of spectrum resources, the transmit end communication apparatus may include, in the trigger frame, indication information that is for indicating whether the receive end communication apparatus is allowed to send the PPDU on a part of resource units. The indication information may also be described as whether the receive end communication apparatus is allowed to send the PPDU on a part of sub-channels whose channel states are idle, or described as whether the receive end communication apparatus is allowed to send the PPDU on a part of resource units whose channel states are idle.

When the transmit end communication apparatus includes, in the trigger frame, the indication information that is for indicating that the receive end communication apparatus is allowed to send the PPDU on the part of resource units, the receive end communication apparatus may obtain, based on the trigger frame, the resource unit allocated by the receive end communication apparatus, and perform carrier sense on one or more sub-channels on which the resource unit is located. When channel states of the sub-channels on which the resource unit is located are all idle, the receive end communication apparatus may send the PPDU through the sub-channels. When channel states of a part of sub-channels are idle, the receive end communication apparatus may send the PPDU through the part of sub-channels whose channel states are idle, thereby avoiding a waste of spectrum resources. It should be noted that the receive end communication apparatus may send the PPDU on the part of sub-channels whose channel states are all idle, or may send the PPDU on the part of sub-channels whose channel states are partially idle. This is not limited herein.

When the transmit end communication apparatus indicates that the receive end communication apparatus is allowed to send the indication information for the PPDU on the part of resource units, the receive end communication apparatus may determine, through carrier sense, the channel state of the sub-channel on which the resource unit allocated to the receive end communication apparatus is located, select a sub-channel whose channel state is idle to send the PPDU, and include, in the PPDU, RU transmission indication information that is for indicating whether to transmit the PPDU on each segment of 80 MHz corresponding to the allocated resource unit.

For example, a maximum bandwidth corresponding to the resource unit allocated by the transmit end communication apparatus to the receive end communication apparatus is 320 MHz. The receive end communication apparatus may use 4 bits in the PPDU to indicate whether the PPDU is transmitted within four segments of 80 MHz in ascending order of frequencies within 320 MHz, that is, the RU transmission indication information is 4 bits.

For example, the resource unit allocated by the transmit end communication apparatus to the receive end communication apparatus is a (996+484)-tone MRU, a 996-tone RU is located within the first segment of 80 MHz, and a 484-tone RU is located within the second segment of 80 MHz. As shown in Table 1, when a channel state of a sub-channel on which the 996-tone RU is located is idle, and a channel state of a sub-channel on which the 484-tone RU is located is idle, the PPDU may be transmitted on all RUs, that is, the PPDU is transmitted on the (996+484)-tone MRU. In this case, a value of the RU transmission indication information may be duplicated from values in a U-SIG disregard field and a U-SIG validate field in the trigger frame. For example, the values in the U-SIG disregard field and the U-SIG validate field in the trigger frame are 1111, and the value of the RU transmission indication information may be 1111.

When a channel state of a sub-channel on which the 996-tone RU is located is idle, and a channel state of a sub-channel on which the 484-tone RU is located is busy, the PPDU may be transmitted on the 996-tone RU. In this case, because a bandwidth of the PPDU is 160 MHz, no PPDU is transmitted within the third segment of 80 MHz and the fourth 80 segment of MHz. For example, a bit value is set to 1 to indicate that the PPDU is transmitted within the segment of 80 MHz corresponding to the bit, and the value of the RU transmission indication information may be 1000.

When a channel state of a sub-channel on which the 996-tone RU is located is busy, and a channel state of a sub-channel on which the 484-tone RU is located is idle, because a bandwidth corresponding to the 484-tone RU is less than 80 MHz, the receive end communication apparatus does not transmit the PPDU.

When a channel state of a sub-channel on which the 996-tone RU is located is busy, and a channel state of a sub-channel on which the 484-tone RU is located is busy, the receive end communication apparatus end does not transmit the PPDU.

It should be noted that, because the resource unit allocated by the receive end communication apparatus is only within the first segment of 80 MHz and the second segment of 80 MHz, indication values in the third segment of 80 MHz and the fourth segment of 80 MHz may also be not limited. Correspondingly, the third bit value and the fourth bit value from left to right are not limited. For example, the third bit value and the fourth bit value may always be duplicated from the values in the U-SIG disregard field and the U-SIG validate field in the trigger frame, or are always set to all 0s, all 1s, or other protocol-specified values. This is not limited.

**Table 1**

| Busy/Idle state of the 996-tone RU | Busy/Idle state of the 484-tone RU | Value of the RU transmission indication information | Meaning of the RU transmission indication information |
|---|---|---|---|
| Idle | Idle | Duplicate the values in the U-SIG disregard field and the U-SIG validate field in the trigger frame (for example, 1111) | Transmission on all RUs (transmission on the (996+484)-tone MRU) |
| Idle | Busy | 1000 (because the bandwidth of the PPDU is 160 MHz, no transmission is performed within the third segment of 80 MHz and the fourth segment of 80 MHz, and the indication is 0) | Transmission on the 996-tone RU |
| Busy | Idle | - | No transmission |
| Busy | Busy | - | No transmission |

Based on related descriptions in Table 1, when the channel state of the sub-channel on which the 996-tone RU is located is busy, even if the channel state of the sub-channel on which the 484-tone RU is located is idle, transmission cannot be performed on the 484-tone RU. The reason is that, in a specific segment of 80 MHz, in addition to the receive end communication apparatus on the 484-tone RU, there may be another receive end communication apparatus, and the value of the RU transmission indication information in the PPDU sent by the another receive end communication apparatus may be a value, for example, 1111, duplicated from the values in the U-SIG disregard field and the U-SIG validate field in the trigger frame. If the receive end communication apparatus on the 484-tone RU uses 4 bits in the U-SIG field of the PPDU to indicate 0100 (which indicates that the PPDU is transmitted only within the second segment of 80 MHz), content of the U-SIG field within different segments of 20 MHz within the segment of 80 MHz is different. Therefore, the PPDU cannot be transmitted on the 484-tone RU.

Based on the foregoing descriptions of the RU transmission indication information, the receive end communication apparatus needs to indicate whether to transmit the PPDU within each segment of 80 MHz. Consequently, the RU transmission indication information occupies a large quantity of bits, and signaling is redundant.

To resolve the foregoing problem, an embodiment of this application provides a physical layer protocol data unit transmission method. The method may include: A first communication apparatus may receive a trigger frame that is for indicating a first resource unit allocated to the first communication apparatus, and send a physical layer protocol data unit PPDU on a part of or all of the first resource unit, where the first resource unit is a resource unit whose quantity of tones is greater than 996; or the first resource unit is a multiple resource unit MRU, and the MRU includes at least one resource unit whose quantity of tones is greater than or equal to 996. The PPDU may further include first indication information, and the first indication information may be for indicating that the PPDU is sent on a part of resource units in the first resource unit, or the first indication information may be for indicating that the PPDU is sent on all resource units in the first resource unit.

In this embodiment of this application, the first communication apparatus may send the PPDU on the part of or all of the first resource unit when there is a sub-channel whose channel state is idle. This avoids a waste of spectrum resources and improves spectrum utilization. In addition, the first communication apparatus may further include the first indication information in the PPDU, to indicate whether the first communication apparatus transmits the PPDU on the part of or all of the first resource unit. In comparison with the RU transmission indication information, this may reduce a quantity of bits and reduce signaling redundancy.

The following describes implementations of embodiments of this application in detail with reference to the accompanying drawings in this specification.

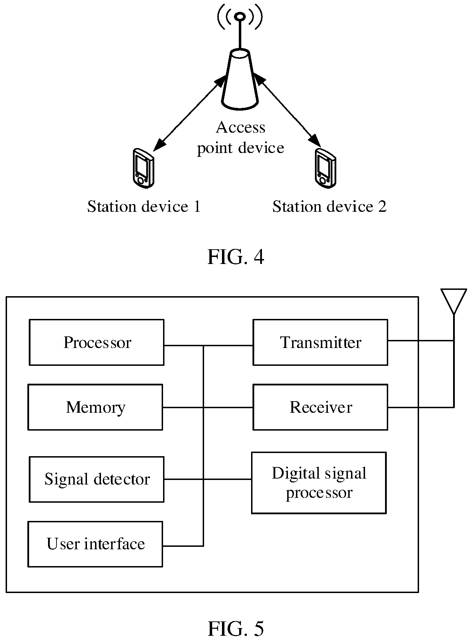

FIG. 4 is a schematic diagram of a communication system according to an embodiment of this application. The communication system may be a system using the 802.11 standard. For example, the 802.11 standard includes but is not limited to the 802. 1 The standard or a next-generation 802.11 standard.

As shown in FIG. 4, the communication system may include one or more access point devices and one or more station devices.

The access point device may be an access point (access point, AP), or may be a chip or a processing system installed in the AP. The station device may be a station (station, STA), or may be a chip or a processing system installed in the STA.

For example, the AP may be a device that supports a plurality of WLAN standards such as the 802.11a/b/g standard, the 802.11n standard, the 802.11ac standard, the 802.11ax standard, the 802.11be standard, or a next-generation 802.11 standard.

The access point (AP) is an apparatus having a wireless communication function, supports communication by using a WLAN protocol, has a function of communicating with another device (for example, a station or another access point) in a WLAN network, and certainly may further have a function of communicating with another device. In a WLAN communication system, the access point may also be referred to as an access point station (AP STA). The apparatus having a wireless communication function may be an entire device, or may be a chip, a processing system, or the like installed in the entire device, or the like. The device in which the chip or the processing system is installed may implement the method and the function in embodiments of this application under control of the chip or the processing system. The AP in embodiments of this application is an apparatus that provides a service for the STA, and may support 802.11 series protocols.

For example, the AP may be a communication entity such as a communication server, a router, a switch, or a bridge. The AP may alternatively be a macro base station, a micro base station, a relay station, or the like in various forms. The AP may alternatively be a chip and a processing system in these various forms of devices. The AP may alternatively be a terminal device or a network device with a Wi-Fi chip. The AP may alternatively be an access point for a mobile user to enter a wired network, and is mainly deployed in a home, inside a building, and inside a park. A typical coverage radius is tens of meters to 100-odd meters. Certainly, the AP may alternatively be deployed outdoors. The AP is equivalent to a bridge that connects a wired network and a wireless network. A main function of the access point is to connect various wireless network clients together and then connect the wireless network to the Ethernet.

For example, the STA may be a device that supports a plurality of WLAN standards such as the 802.11a/b/g standard, the 802.11n standard, the 802.11ac standard, the 802.11ax standard, or the 802.11be standard.

The STA is an apparatus having a wireless communication function, supports communication by using a WLAN protocol, and has a capability of communicating with another station or an access point in the WLAN network. In the WLAN system, the station may be referred to as a non-access point station (non-access point station, non-AP STA). The STA is any user communication device that allows a user to communicate with the AP and further communicate with the WLAN. The apparatus having a wireless communication function may be an entire device, or may be a chip, a processing system, or the like installed in the entire device. The device in which the chip or the processing system is installed may implement the method and the function in embodiments of this application under control of the chip or the processing system.

For example, the STA may be user equipment that can be connected to the Internet, such as a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a mobile phone, a set-top box, a smart television, or a smart wearable device, or may be an internet of things node in the internet of things, or may be a vehicle-mounted communication apparatus in the internet of vehicles, or may be an entertainment device, a game device or a system, a global positioning system device, or the like. The STA may alternatively be a chip and a processing system in the foregoing terminals. Alternatively, the STA may be a wireless communication chip, a wireless sensor, or a wireless communication terminal.

For example, as shown in FIG. 5, the access point device or the station device may have the structure shown in FIG. 5. The access point device or the station device may be multi-antenna/multi-radio frequency, or may be single-antenna/single-radio frequency. The antenna/radio frequency is for sending/receiving a packet (where the packet in this specification may also be referred to as a physical layer protocol data unit, namely, a PPDU). In an implementation, an antenna or a radio frequency part of the access point device or the station device may be separated from a main body part of the access point device or the station device, and is in a remote layout structure. In FIG. 5, the access point device or the station device may further include modules such as a processor, a memory, a signal detector, a user interface, a transmitter, a receiver, and a digital signal processor. This is not limited.

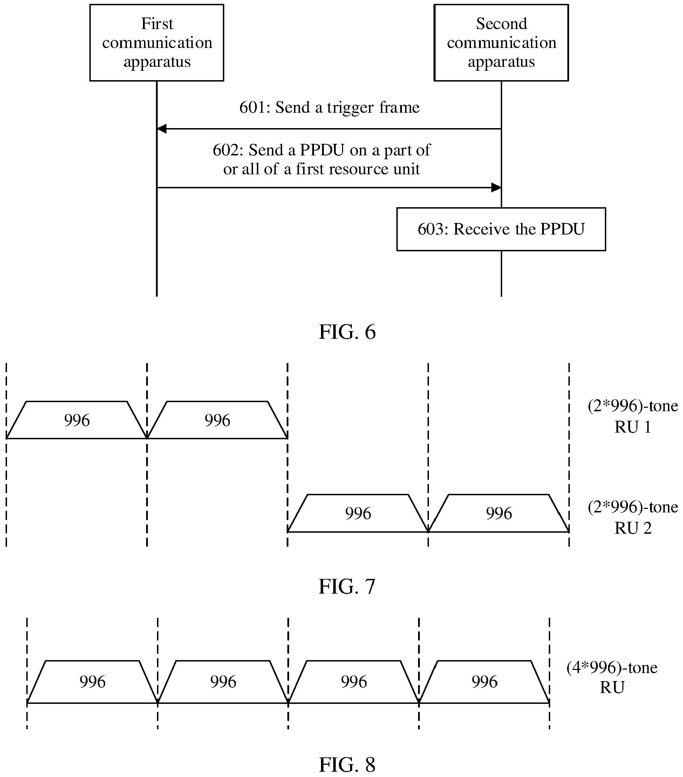

With reference to the communication system shown in FIG. 4, the following describes a physical layer protocol data unit transmission method provided in embodiments of this application by using a PPDU in the 802.11be standard as an example. Refer to FIG. 6. A first communication apparatus may be an access point device or a station device in the communication system shown in FIG. 4, and a second communication apparatus may be any access point device or station device other than the first communication apparatus in the communication system shown in FIG. 4.

FIG. 6 is a flowchart of a physical layer protocol data unit transmission method according to an embodiment of this application. As shown in FIG. 6, the method may include the following steps.

Step 601: A second communication apparatus sends a trigger frame, and correspondingly a first communication apparatus receives the trigger frame.

The trigger frame may be for indicating a first resource unit allocated to the first communication apparatus. The first resource unit may be a resource unit whose quantity of tones is greater than 996; or the first resource unit may be an MRU, and the MRU may include at least one resource unit whose quantity of tones is greater than or equal to 996.

In the 802.11ax standard, one resource unit may be allowed to be allocated to one communication apparatus. In the 802.11be standard, one or more resource units may be allowed to be allocated to one communication apparatus. It should be understood that allocating a plurality of resource units to one communication apparatus may also be understood as combining and allocating a plurality of resource units to one communication apparatus.

In this embodiment of this application, a case in which an MRU/RU format supported by the 802.11be standard includes at least one resource unit (namely, a 996-tone RU) whose bandwidth is equal to 80 MHz is mainly considered. It should be understood that the 996-tone RU may be understood as an RU including 996 tones, and a bandwidth of each 996-tone RU is 80 MHz. The following describes several types of MRUs/RUs supported by the 802.11be standard. It should be understood that the 802.11be standard supports more MRU/RU formats than those listed in this specification. For details, refer to related descriptions in the 802.11be standard. Only an example is provided herein for description.

For example, when the first resource unit is a resource unit whose quantity of tones is greater than 996, the first resource unit may be a resource unit whose quantity of tones is M multiplied by 996, where M is greater than or equal to 2. For example, the first resource unit may be a (2*996)-tone RU shown in FIG. 7, or may be a (4*996)-tone RU shown in FIG. 8. Alternatively, the first resource unit may be a resource unit whose quantity of tones is greater than 996 and that is specified in a next-generation 802.11 standard. This is not limited in this application.

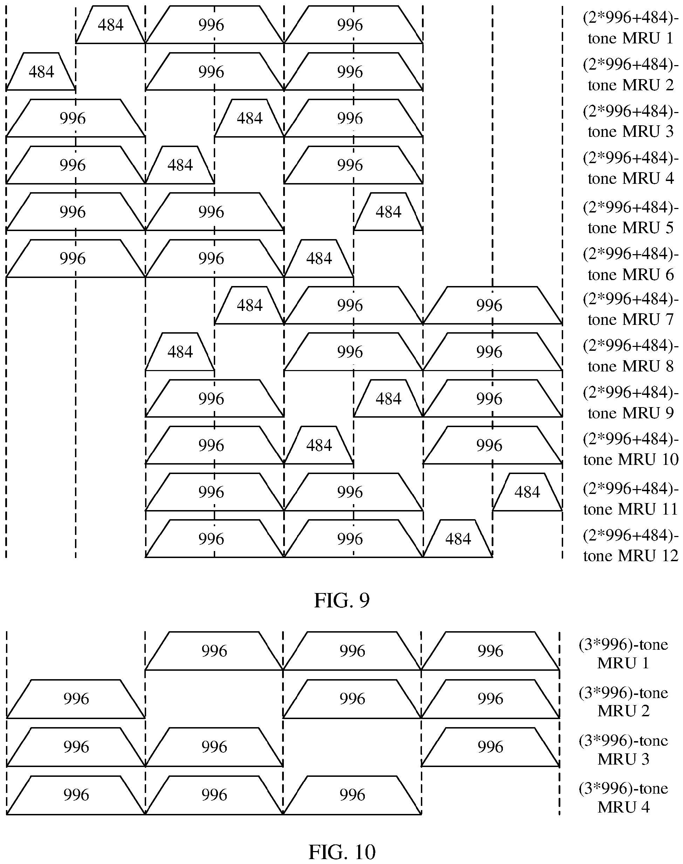

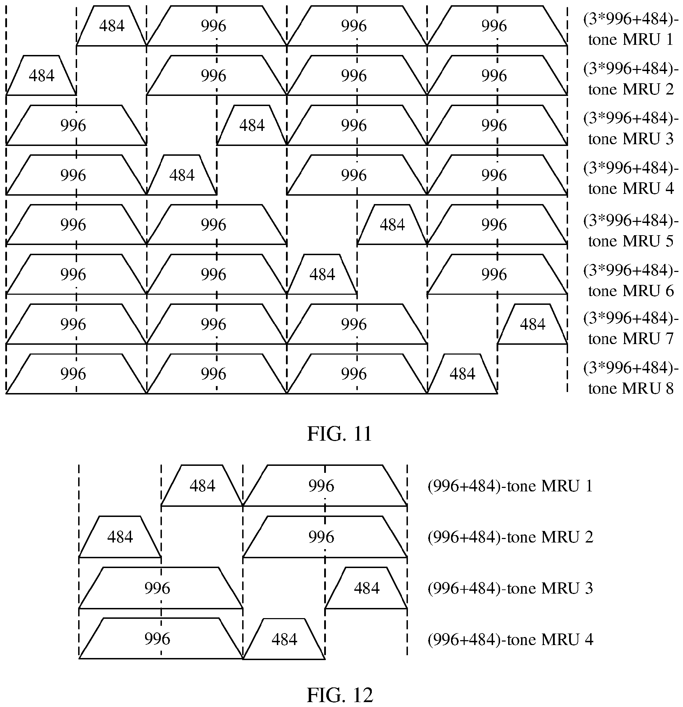

In another example, when the first resource unit is an MRU, the MRU may include at least one resource unit whose quantity of tones is greater than 996. For example, the MRU may be a (2*996+484)-tone MRU shown in FIG. 9, or may be a (3*996)-tone MRU shown in FIG. 10, or may be a (3*996+484)-tone MRU shown in FIG. 11. Alternatively, the first resource unit may be an MRU that includes at least one resource unit whose quantity of tones is greater than 996 and that is specified in a next-generation 802.11 standard. This is not limited in this application.

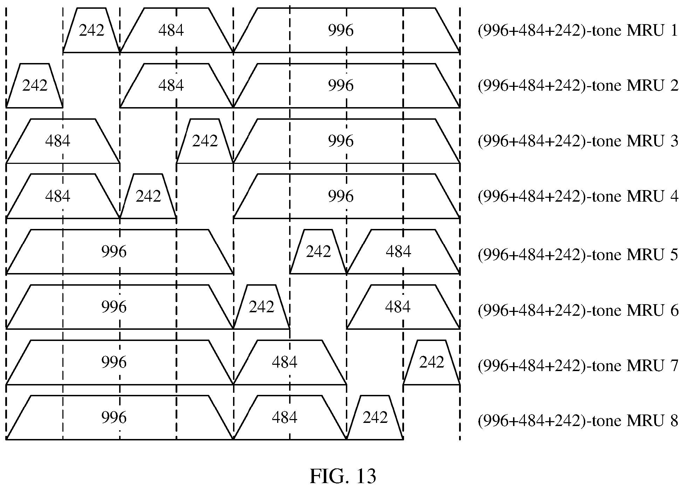

In still another example, when the first resource unit is an MRU, the MRU may also include at least one resource unit whose quantity of tones is equal to 996. For example, the MRU may be a (996+484)-tone MRU shown in FIG. 12, or may be a (996+484+242)-tone MRU shown in FIG. 13, or may be a (3*996)-tone MRU shown in FIG. 10, or may be a (3*996+484)-tone MRU shown in FIG. 11. Alternatively, the first resource unit may be an MRU that includes at least one resource unit whose quantity of tones is equal to 996 and that is specified in a next-generation 802.11 standard. This is not limited in this application.

It should be noted that, as shown in Table 2 below, for an orthogonal frequency division multiple access (orthogonal frequency division multiple access, OFDMA) system and a non-OFDMA (non-OFDMA) system, the non-OFDMA system may support the RU or the MRU shown in any one of FIG. 7 to FIG. 13, and the OFDMA system may support the RU or the MRU shown in any one of FIG. 7 to FIG. 12. Table 2 is merely an example for description. For the next-generation 802.11 standard, the OFDMA system and the non-OFDMA system may further support another RU or MRU. For example, the OFDMA system may further support a (996+484+242)-tone MRU. This is not limited.

**Table 2**

| RU or MRU | |
|---|---|
| (2*996)-tone RU | Non-OFDMA, and OFDMA |
| (4*996)-tone RU | Non-OFDMA, and OFDMA |
| (2*996+484)-tone MRU | Non-OFDMA, and OFDMA |
| (3*996)-tone MRU | Non-OFDMA, and OFDMA |
| (3*996+484)-tone MRU | Non-OFDMA, and OFDMA |
| (996+484)-tone MRU | Non-OFDMA, and OFDMA |
| (996+484+242)-tone MRU | Non-OFDMA |

It should be noted that, because the 802.11be standard allows allocating a plurality of RUs to one receive end communication apparatus, the 802.11be standard also specifies the following constraint conditions for allocating the plurality of RUs to one receive end communication apparatus:
(1) A small RU can only be combined/grouped with a small RU to form an MRU (small size RUs can only be combined with small size RUs to form small size MRUs), and a large RU can only be combined/grouped with a large RU to form an MRU (large size RUs can only be combined with large size RUs to form large size MRUs). In other words, a large RU is not allowed to be combined/grouped with a small RU. An RU whose size is greater than or equal to 242 tones is referred to as a large RU (RUs that are the same size or larger than 242-tone RUs are defined as large size RUs), and an RU whose size is less than 242 tones is referred to as a small RU (RUs that are smaller than 242-tone RUs are defined as small size RUs). Optionally, the first constraint condition may also be understood as follows: A first-type RU can only be combined/grouped with a first-type RU to form an MRU, and a second-type RU can only be combined/grouped with a second-type RU to form an MRU. In other words, different types of RUs are not allowed to be combined/grouped. The first-type RU and the second-type RU herein may be distinguished based on the size of the RU. For example, the first-type RU is an RU whose size is greater than or equal to 242 tones, and the second-type RU is an RU whose size is less than 242 tones.
(2) For combination/grouping between small RUs, the 802.11be standard currently supports two types of combination/grouping manners. Manner 1: A 106-tone RU and a 26-tone RU are combined/grouped. Manner 2: A 52-tone RU and a 26-tone RU are combined/grouped. For a specific combination/grouping manner, refer to related descriptions in the 802.11be standard document. Details are not described herein. The 106-tone RU represents an RU including 106 tones, the 26-tone RU represents an RU including 26 tones, and the 52-tone RU represents an RU including 52 tones.
(3) For combination/grouping between large RUs, the 802.11be standard currently supports two types of combination manners in an 80 MHz bandwidth. Manner 1: A 484-tone RU and a 242-tone RU are combined. Manner 2: A 242-tone RU and a 242-tone RU are combined. For grouping/combination manners in a 160 MHz bandwidth, a 240 MHz bandwidth, and a 320 MHz bandwidth, in this application, a case in which an MRU/RU format supported by the 802.11be standard includes at least one 996-tone RU is considered. A possible grouping/combination manner is shown in FIG. 7 to FIG. 13. Details are not described herein again.

Based on the foregoing descriptions of the RU and the MRU, the second communication apparatus may indicate, by using a resource unit allocation subfield in the trigger frame, the first resource unit allocated to the first communication apparatus.

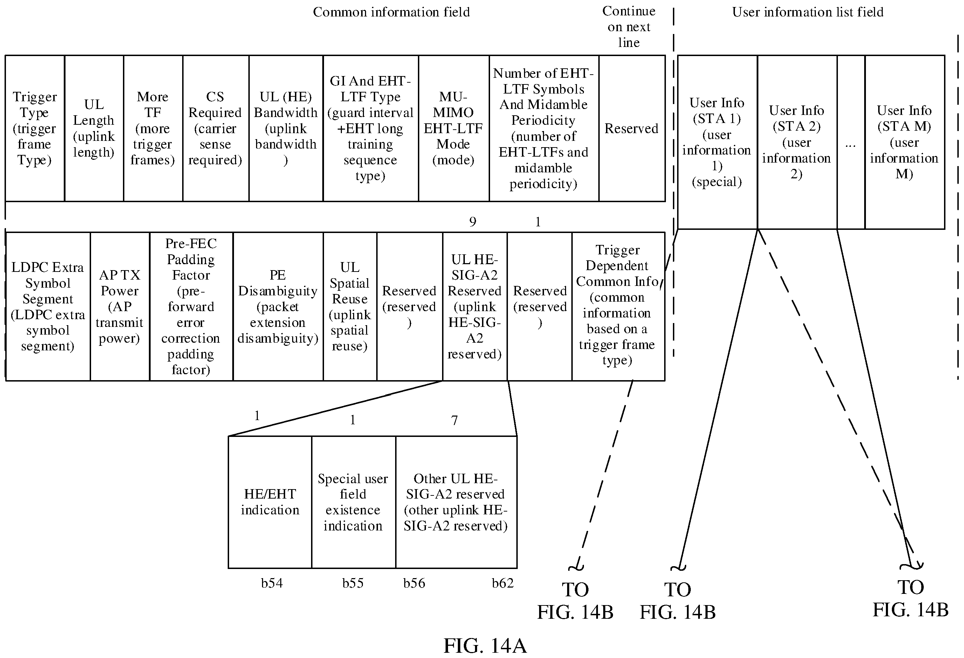

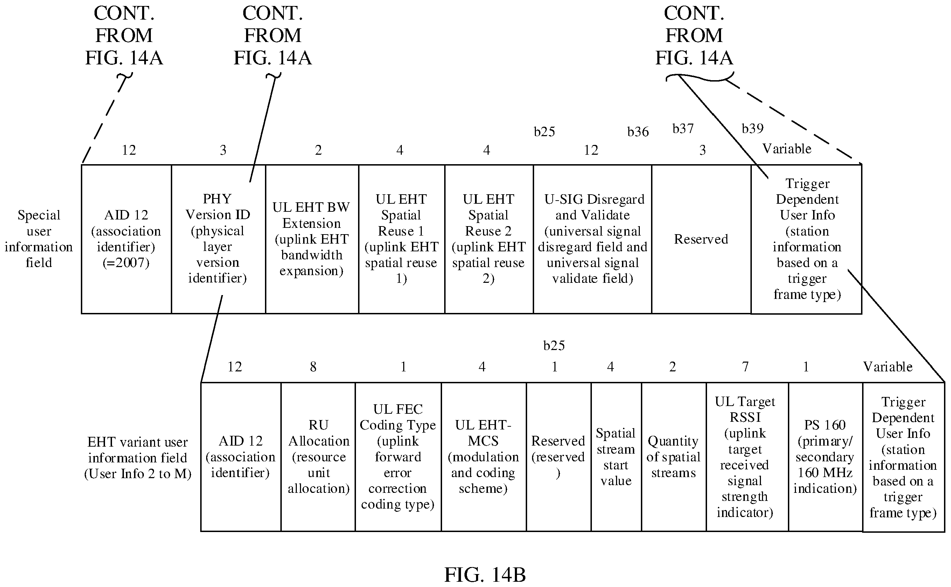

As shown in FIG. 14A and FIG. 14B, the trigger frame may include fields such as a common information field and a user information list field. The common information field may include common information that needs to be read by each receive end communication apparatus. The user information list field may include one or more user information fields, and each user information field includes information that needs to be read by each receive end communication apparatus. The user information field may include fields such as an association identifier (association identification 12, AID 12) field and a resource unit allocation (resource unit allocation, RU allocation) subfield. The association identifier field may be for indicating an association identifier of a specific receive end communication apparatus, and the resource unit allocation subfield may be for indicating a location of an RU allocated by the receive end communication apparatus (namely, the receive end communication apparatus indicated by the AID 12). In other words, the user information field corresponding to the first communication apparatus may be for indicating the first resource unit allocated to the first communication apparatus.

In comparison with the 802.11ax standard, as shown in FIG. 14A and FIG. 14B, in the 802.11be standard, a special user information field in the user information list field may be further for extending the common information field. The special user information field may be the first user information field in the user information list field, that is, the special user information field is the first user information field closely following the common information field.

Specifically, the special user information field may include an association identifier field whose association identifier is 2007, and remaining bits of the special user information field may be used as extension of the common information field in the 802.11be standard. The special user information field may further include a physical layer version identifier field, an uplink EHT bandwidth extension field, an uplink EHT spatial reuse 1 field, an uplink EHT spatial reuse 2 field, a universal signal (universal SIG, U-SIG) disregard field and a universal signal validate field, a reserved field, and a station information field based on a trigger frame type.

The physical layer version identifier field may be for indicating that the trigger frame is a trigger frame of an EHT standard or a later specific generation of standard. The uplink EHT bandwidth extension field may be used together with the uplink bandwidth field in the common information field to indicate a bandwidth of an EHT PPDU, and the uplink bandwidth field in the common information field may also be for indicating a bandwidth of an HE PPDU. The uplink EHT spatial reuse 1 field and the uplink EHT spatial reuse 2 field may be for indicating a spatial reuse field in the universal signal field in the EHT PPDU, and an uplink spatial reuse field in the common information field may be for indicating a spatial reuse field in an HE-SIG-A field in the HE PPDU. As shown in Table 3 below, the U-SIG disregard field and the U-SIG validate field in the special user information field of the trigger frame may be for indicating values in a U-SIG disregard field and a U-SIG validate field in the EHT TB PPDU.

**Table 3**

| Bits of the U-SIG disregard field and the U-SIG validate field in the special user information field | Bits of the U-SIG disregard field and the U-SIG validate field in the EHT TB PPDU |
|---|---|
| b25 to b30 | Duplicate to b20 to b25 of a U-SIG-1 field (disregard subfield) |
| b31 | Duplicate to b2 of a U-SIG-2 field (validate subfield) |
| b32 to b36 | Duplicate to b11 to b15 of the U-SIG-2 field (disregard subfield) |

Based on the foregoing descriptions of the special user information field, in the 802.11be standard, a first bit (namely, a common information field b54) may be redefined to indicate whether the HE TB PPDU or the EHT TB PPDU is transmitted within a primary segment of 160 MHz, and a second bit (namely, a common information field b55) is for indicating whether the special user information field exists.

The second communication apparatus may further indicate, by using a carrier sense field is required in the common information field of the trigger frame, the first communication apparatus to perform carrier sense.

Optionally, the trigger frame further includes fourth indication information.

The fourth indication information may be for indicating that the first communication apparatus is allowed to send the PPDU on a part of resource units in the first resource unit; or the fourth indication information may be for indicating that the first communication apparatus is not allowed to transmit the PPDU on a part of resource units in the first resource unit.

When the fourth indication information is for indicating that the first communication apparatus is allowed to send the PPDU on the part of resource units in the first resource unit, the first communication apparatus may send, by using the following step 602, the PPDU on a part of or all of the first resource unit whose channel state is idle. When the fourth indication information is for indicating that the first communication apparatus is not allowed to send the PPDU on the part of resource units in the first resource unit, the first communication apparatus may send the PPDU on all of the first resource unit whose channel state is idle. When there is at least one sub-channel whose channel state is busy, the first communication apparatus does not send the PPDU.

Optionally, the fourth indication information may be located in the common information field or the special user information field in the trigger frame, or may be located in the user information field corresponding to the first communication apparatus. This is not limited. The fourth indication information may be one or more bits, and indicate whether sending of the PPDU on the part of resource units is allowed at each bandwidth granularity. For example, 4 bits are for indicating whether sending of the PPDU on the part of resource units is allowed within each segment of 80 MHz, or 2 bits are for indicating whether sending of the PPDU on the part of resource units is allowed within each segment of 160 MHz, or 1 bit is for indicating whether sending of the PPDU on the part of resource units is allowed within a segment of 320 MHz. In addition, when the fourth indication information is located in the user information field corresponding to the first communication apparatus, 1 bit may be for indicating whether the first communication apparatus is allowed to send the PPDU on the part of resource units.

It should be noted that when the fourth indication information is for indicating that the first communication apparatus is allowed to send the PPDU on the part of resource units in the first resource unit, the first resource unit is not used to schedule multiple user multiple input multiple output (multiple user multiple input multiple output, MU-MIMO) transmission. Alternatively, it may be described as follows: If the first resource unit is for scheduling the MU-MIMO transmission, the first communication apparatus is not allowed to send the PPDU on the part of resource units in the first resource unit.

Step 602: The first communication apparatus sends the PPDU on the part of or all of the first resource unit.

In this embodiment of this application, sub-channels may be divided by using a granularity of 80 MHz. After receiving the trigger frame, the first communication apparatus may perform, based on the carrier sense field that is required in the common information field in the trigger frame, carrier sense on each 20 MHz sub-channel within each segment of 80 MHz corresponding to the first resource unit, to detect whether energy sensed exceeds a predetermined threshold. If it is detected that energy of at least one 20 MHz sub-channel within a specific segment of 80 MHz exceeds the predetermined threshold, it is determined that a specific 80 MHz sub-channel is busy; or if it is detected that energy of each 20 MHz sub-channel within a specific 80 segment of MHz does not exceed the predetermined threshold, it is determined that a specific 80 MHz sub-channel is idle.

Specifically, when the first communication apparatus is allowed to transmit the PPDU on the part of resource units in the first resource unit, the first communication apparatus may send the PPDU in the following manners:
Manner (1): If channel states of all sub-channels corresponding to the first resource unit are idle, the first communication apparatus may transmit the PPDU on all resource units in the first resource unit.
Manner (2): If channel states of a part of sub-channels in sub-channels corresponding to the first resource unit are idle, and a quantity of tones of resource units corresponding to the part of sub-channels is greater than or equal to 996, the first communication apparatus may send the PPDU on a resource unit whose quantity of tones is N multiplied by 996 in the resource units corresponding to the part of sub-channels, where N is greater than or equal to 1.
Manner (3): If channel states of a part of sub-channels in sub-channels corresponding to the first resource unit are idle, and a quantity of tones of resource units corresponding to the part of sub-channels is less than 996, the first communication apparatus does not send the PPDU.

Optionally, the PPDU further includes first indication information.

The first indication information is for indicating that the PPDU is sent on the part of resource units in the first resource unit, or the first indication information is for indicating that the PPDU is sent on all the resource units in the first resource unit.

For example, the first indication information may be a preset bit value.

For example, the first indication information is 1 bit. The 1 bit may be set to 1 to indicate that the PPDU is sent on the part of resource units in the first resource unit, or the 1 bit may be set to 0 to indicate that the PPDU is sent on all the resource units in the first resource unit. Alternatively, the 1 bit may be set to 0 to indicate that the PPDU is sent on the part of resource units in the first resource unit, or the 1 bit may be set to 1 to indicate that the PPDU is sent on all the resource units in the first resource unit.

In another example, the first indication information may alternatively be a default value of the U-SIG disregard field and the U-SIG validate field in the special user information field in the trigger frame.

For example, a value of the first indication information may be set to the foregoing default value to indicate that the PPDU is sent on the part of resource units in the first resource unit, or a value of the first indication information may be set to a value other than the foregoing default value to indicate that the PPDU is sent on all the resource units in the first resource unit.

For another example, the value of the first indication information may be set to the foregoing default value to indicate that the PPDU is sent on all the resource units in the first resource unit, or the value of the first indication information is set to a value other than the foregoing default value, to indicate that the PPDU is sent on the part of resource units in the first resource unit.

Based on the foregoing descriptions of the first indication information, for example, the first indication information is 1 bit, and the 1 bit is set to 1 to indicate that the PPDU is sent on all the resource units in the first resource unit, or the 1 bit is set to 0 to indicate that the PPDU is sent on the part of resource units in the first resource unit. As shown in Table 4 below, an example in which the first resource unit allocated by the second communication apparatus to the first communication apparatus is a (996+484)-tone MRU is used.

When a channel state of a sub-channel on which a 996-tone RU is located is idle, and a channel state of a sub-channel on which a 484-tone RU is located is busy, according to Manner (2), the first communication apparatus may send the PPDU on the 996-tone RU. In this case, the first indication information may be 0.

When a channel state of a sub-channel on which a 996-tone RU is located is idle, and a channel state of a sub-channel on which a 484-tone RU is located is idle, according to Manner (1), the first communication apparatus may send the PPDU on the (996+484)-tone MRU. In this case, the first indication information may be 1.

When a channel state of a sub-channel on which a 996-tone RU is located is busy, regardless of whether a channel state of a sub-channel on which a 484-tone RU is located is idle or busy, according to Manner (3), the first communication apparatus does not send the PPDU.

**Table 4**

| Busy/Idle state of the 996-tone RU | Busy/Idle state of the 484-tone RU | PPDU transmission status | Value of the first indication information |
|---|---|---|---|
| Idle | Busy | Transmission on the 996-tone RU | 0 |
| Idle | Idle | Transmission on all RUs (namely, transmission on the (996+484)-tone MRU) | 1 |
| Busy | - | No transmission | - |

For example, the first indication information is 1 bit, and the 1 bit is set to 0 to indicate that the PPDU is sent on all the resource units in the first resource unit, or the 1 bit is set to 1 to indicate that the PPDU is sent on the part of resource units in the first resource unit. As shown in Table 5, an example in which the first resource unit allocated by the second communication apparatus to the first communication apparatus is a (996+484)-tone MRU is used.

When a channel state of a sub-channel on which a 996-tone RU is located is idle, and a channel state of a sub-channel on which a 484-tone RU is located is busy, according to Manner (2), the first communication apparatus may send the PPDU on the 996-tone RU. In this case, the first indication information may be 1.

When a channel state of a sub-channel on which a 996-tone RU is located is idle, and a channel state of a sub-channel on which a 484-tone RU is located is idle, according to Manner (1), the first communication apparatus may send the PPDU on the (996+484)-tone MRU. In this case, the first indication information may be 1.

When a channel state of a sub-channel on which a 996-tone RU is located is busy, regardless of whether a channel state of a sub-channel on which a 484-tone RU is located is idle or busy, according to Manner (3), the first communication apparatus does not send the PPDU.

**Table 5**

| Busy/Idle state of the 996-tone RU | Busy/Idle state of the 484-tone RU | PPDU transmission status | Value of the first indication information |
|---|---|---|---|
| Idle | Busy | Transmission on the 996-tone RU | 1 |
| Idle | Idle | Transmission on all RUs (namely, transmission on the (996+484)-tone MRU) | 0 |
| Busy | - | No transmission | - |

For example, the first indication information is 1 bit, and the 1 bit is set to 1 to indicate that the PPDU is sent on all the resource units in the first resource unit, or the 1 bit is set to 0 to indicate that the PPDU is sent on the part of resource units in the first resource unit. As shown in Table 6, an example in which the first resource unit allocated by the second communication apparatus to the first communication apparatus is a (2×996)-tone RU is used.

When a channel state of a sub-channel on which the first 996-tone RU is located is idle, and a channel state of a sub-channel on which the second 996-tone RU is located is busy, according to Manner (2), the first communication apparatus may send the PPDU on the first 996-tone RU. In this case, the first indication information may be 0.

When a channel state of a sub-channel on which the first 996-tone RU is located is idle, and a channel state of a sub-channel on which the second 996-tone RU is located is idle, according to Manner (1), the first communication apparatus may send the PPDU on the (2×996)-tone RU. In this case, the first indication information may be 1.

When a channel state of a sub-channel on which the first 996-tone RU is located is busy, and a channel state of a sub-channel on which a second 996-tone RU is located is idle, according to Manner (2), the first communication apparatus may send the PPDU on the second 996-tone RU. In this case, the first indication information may be 0.

When a channel state of a sub-channel on which the first 996-tone RU is located is busy, and a channel state of a sub-channel on which the second 996-tone RU is located is busy, the first communication apparatus does not send the PPDU.

**Table 6**

| Busy/Idle state of the first 996-tone RU | Busy/Idle state of the second 996-tone RU | PPDU transmission status | Value of the first indication information |
|---|---|---|---|
| Idle | Busy | Transmission on the first 996-tone RU | 0 |
| Idle | Idle | Transmission on all RUs (namely, transmission on the (2×996)-tone RU) | 1 |
| Busy | Idle | Transmission on the second 996-tone RU | 0 |
| Busy | Busy | No transmission | - |

For example, the first indication information is 1 bit, and the 1 bit is set to 1 to indicate that the PPDU is sent on all the resource units in the first resource unit, or the 1 bit is set to 0 to indicate that the PPDU is sent on the part of resource units in the first resource unit. As shown in Table 7, an example in which the first resource unit allocated by the second communication apparatus to the first communication apparatus is a (2×996+484)-tone MRU is used.

When a channel state of a sub-channel on which the first 996-tone RU is located is idle, a channel state of a sub-channel on which the second 996-tone RU is located is busy, and a channel state of a sub-channel on which a 484-tone RU is located is busy, according to Manner (2), the first communication apparatus may send the PPDU on the first 996-tone RU. In this case, the first indication information may be 0.

When a channel state of a sub-channel on which the first 996-tone RU is located is idle, a channel state of a sub-channel on which the second 996-tone RU is located is idle, and a channel state of a sub-channel on which a 484-tone RU is located is busy, according to Manner (2), the first communication apparatus may send the PPDU on the first 996-tone RU and the second 996-tone RU. In this case, the first indication information may be 0.

When a channel state of a sub-channel on which the first 996-tone RU is located is idle, a channel state of a sub-channel on which the second 996-tone RU is located is busy, and a channel state of a sub-channel on which a 484-tone RU is located is idle, according to Manner (2), the first communication apparatus may send the PPDU on the first 996-tone RU. In this case, the first indication information may be 0.

When a channel state of a sub-channel on which the first 996-tone RU is located is idle, a channel state of a sub-channel on which the second 996-tone RU is located is idle, and a channel state of a sub-channel on which a 484-tone RU is located is idle, according to Manner (1), the first communication apparatus may send the PPDU on the (2×996+484)-tone MRU. In this case, the first indication information may be 1.

When a channel state of a sub-channel on which the first 996-tone RU is located is busy, a channel state of a sub-channel on which the second 996-tone RU is located is idle, and a channel state of a sub-channel on which a 484-tone RU is located is busy, according to Manner (2), the first communication apparatus may send the PPDU on the second 996-tone RU. In this case, the first indication information may be 0.

When a channel state of a sub-channel on which the first 996-tone RU is located is busy, a channel state of a sub-channel on which the second 996-tone RU is located is idle, and a channel state of a sub-channel on which a 484-tone RU is located is idle, according to Manner (2), the first communication apparatus may send the PPDU on the second 996-tone RU. In this case, the first indication information may be 0.

When a channel state of a sub-channel on which the first 996-tone RU is located is busy, and a channel state of a sub-channel on which the second 996-tone RU is located is busy, regardless of whether a channel state of a sub-channel on which a 484-tone RU is located is busy or idle, according to Manner (3), the first communication apparatus does not send the PPDU.

**Table 7**

| Busy/Idle state of the first 996-tone RU | Busy/Idle state of the second 996-tone RU | Busy/Idle state of the 484-tone RU | PPDU transmission status | Value of the first indication information |
|---|---|---|---|---|
| Idle | Busy | Busy | Transmission on the first 996-tone RU | 0 |
| Idle | Idle | Busy | Transmission on the first 996-tone RU and the second 996-tone RU | 0 |
| Idle | Busy | Idle | Transmission on the first 996-tone RU | 0 |
| Idle | Idle | Idle | Transmission on all RUs (namely, transmission on the (2×996+484)-tone MRU) | 1 |
| Busy | Idle | Busy | Transmission on the second 996-tone RU | 0 |
| Busy | Idle | Idle | Transmission on the second 996-tone RU | 0 |
| Busy | Busy | Busy/Idle | No transmission | - |

For example, the first indication information is 1 bit, and the 1 bit is set to 1 to indicate that the PPDU is sent on all the resource units in the first resource unit, or the 1 bit is set to 0 to indicate that the PPDU is sent on the part of resource units in the first resource unit. As shown in Table 8, an example in which the first resource unit allocated by the second communication apparatus to the first communication apparatus is a (996+484+242)-tone MRU is used.

When a channel state of a sub-channel on which a 996-tone RU is located is idle, a channel state of a sub-channel on which a 484-tone RU is located is busy, and a channel state of a sub-channel on which a 242-tone RU is located is busy, according to Manner (2), the first communication apparatus may send the PPDU on the 996-tone RU. In this case, the first indication information may be 0.

When a channel state of a sub-channel on which a 996-tone RU is located is idle, a channel state of a sub-channel on which a 484-tone RU is located is idle, and a channel state of a sub-channel on which a 242-tone RU is located is busy, according to Manner (2), the first communication apparatus may send the PPDU on the 996-tone RU. In this case, the first indication information may be 0.

When a channel state of a sub-channel on which a 996-tone RU is located is idle, a channel state of a sub-channel on which a 484-tone RU is located is busy, and a channel state of a sub-channel on which a 242-tone RU is located is idle, according to Manner (2), the first communication apparatus may send the PPDU on the 996-tone RU. In this case, the first indication information may be 0.

When a channel state of a sub-channel on which a 996-tone RU is located is idle, a channel state of a sub-channel on which a 484-tone RU is located is idle, and a channel state of a sub-channel on which a 242-tone RU is located is idle, according to Manner (1), the first communication apparatus may send the PPDU on the (996+484+242)-tone MRU. In this case, the first indication information may be 1.

When a channel state of a sub-channel on which a 996-tone RU is located is busy, regardless of whether a channel state of a sub-channel on which a 484-tone RU is located is idle or busy, or regardless of whether a channel state of a sub-channel on which a 242-tone RU is located is busy or idle, according to Manner (3), the first communication apparatus does not send the PPDU.

**Table 8**

| Busy/Idle state of the first 996-tone RU | Busy/Idle state of the second 996-tone RU | Busy/Idle state of the 484-tone RU | PPDU transmission status | Value of the first indication information |
|---|---|---|---|---|
| Idle | Busy | Busy | Transmission on the first 996-tone RU | 0 |
| Idle | Idle | Busy | Transmission on the first 996-tone RU and the second 996-tone RU | 0 |
| Idle | Busy | Idle | Transmission on the first 996-tone RU | 0 |
| Idle | Idle | Idle | Transmission on all RUs (namely, transmission on the (2×996+484)-tone MRU) | 1 |
| Busy | Busy/Idle | Busy/Idle | No transmission | - |

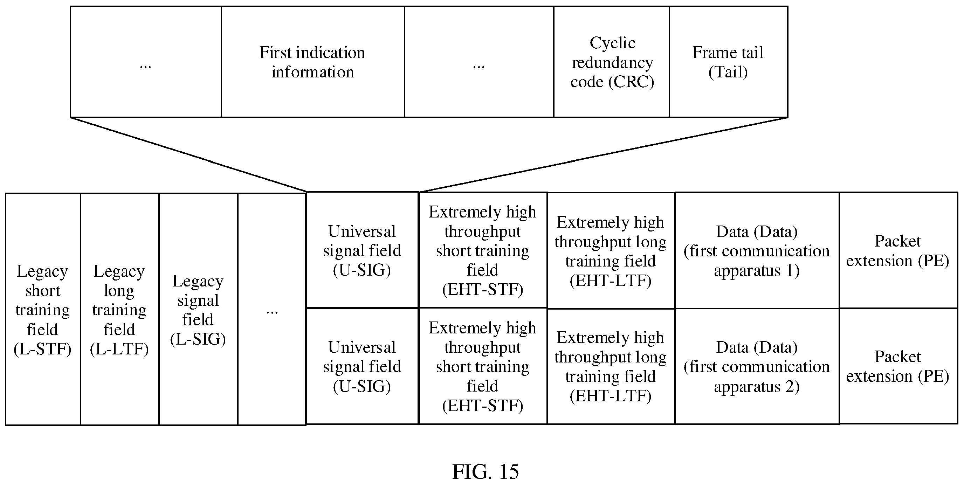

Based on the foregoing descriptions of the first indication information, as shown in FIG. 15, the first communication apparatus may include the first indication information in the universal signal U-SIG field of the PPDU.

As shown in Table 9 below, the PPDU may include fields such as a legacy short training field, a legacy long training field, a legacy signal field, a repeated legacy signal field, a universal signal field, an extremely high throughput short training field, an extremely high throughput long training field, a data field, and a packet extension field.

**Table 9**

| English acronyms and abbreviations | Complete English expression | Chinese expression | Function |
|---|---|---|---|
| L-STF | Legacy Short Training Field | Legacy short training field | Used for PPDU discovery, coarse synchronization, and automatic gain control |
| L-LTF | Legacy Long Training Field | Legacy long training field | Used for precise synchronization and channel estimation |
| L-SIG | Legacy Signal Field | Legacy signal field | Used for carrying signaling information related to a PPDU length, to ensure coexistence |
| RL-SIG | Repeated Legacy Signal Field | Repeated legacy signal field | Used for carrying signaling information related to a PPDU length, to ensure coexistence |
| U-SIG | Universal SIG | Universal signal field | Similar to the HE-SIG-A. A difference lies in that the universal signal field starts from an EHT PPDU, and a unified signal field is used in a subsequent standard. |
| | | | Therefore, the unified signal field is referred to as the universal signal field |
| EHT-STF | Extremely High Throughput Short Training Field | Extremely high throughput short training field | Used for automatic gain control of a subsequent field |
| EHT-LTF | Extremely High Throughput Long Training Field | Extremely high throughput long training field | Used for channel estimation |
| Data | | Data | Carry data information |
| PE | Packet Extension | Packet extension | Used to prolong processing time of a receiver |

As shown in Table 10 below, the U-SIG field may include a physical layer version indication field, a bandwidth field, an uplink/downlink (uplink/downlink, UL/DL) field, a basic service set color (basic service set color, BSS color) field, a transmission opportunity (TXOP) field, a disregard (disregard) field, a PPDU format and compression mode field, a validate (validate) field, a spatial reuse 1 (spatial reuse 1) field, a spatial reuse 2 (spatial reuse 2) field, a disregard (disregard) field, a cyclic redundancy code (cyclic redundancy code, CRC) field, and a tail (tail) field.

**Table 10**

| Bit | Field | Meaning |
|---|---|---|
| B0 and B2 (U-SIG-1) | Physical layer version indication | Indicate a physical layer version of the PPDU, and in this application, indicate an EHT PPDU |
| B3 to B5 | Bandwidth | Indicate the bandwidth of the PPDU |
| B6 | Uplink/Downlink | Indicate an uplink or a downlink, and in this application, indicate the uplink |
| B7 to B12 | BSS Color | The BSS is for indicating an identifier of the basic service set |
| B13 to B19 | TXOP | Indicate a transmission opportunity |
| B20 to B25 | Disregard | Based on settings of the U-SIG disregard field and the U-SIG validate field in the trigger frame |
| B0 and B1 (U-SIG-2) | PPDU format and compression mode | Indicate a format of the PPDU, and in this application, indicate an EHT TB PPDU |
| B2 | Validate | Based on B25 to B30 settings of the U-SIG disregard field and the U-SIG validate field in the trigger frame |
| B3 to B6 | Spatial Reuse 1 | Indicate spatial reuse information |
| B7toB10 | Spatial Reuse 2 | Indicate spatial reuse information |
| B11 to B15 | Disregard | Based on B32 to B36 settings of the U-SIG disregard field and the U-SIG validate field in the trigger frame |
| B16 to B19 | CRC | Used for checking the U-SIG, and the CRC in the U-SIG and/or the EHT-SIG may be more bits, and improving reliability |
| B20 to B25 | Tail | Tail bit, used to end coding |

The first communication apparatus may set a bit in the disregard field in the U-SIG field as the first indication information, or may set a bit in the validate field in the U-SIG field as the first indication information, or may set a bit in the disregard field and the validate field in the U-SIG field as the first indication information, or may reuse a bit in another field in the U-SIG field as the first indication information. This is not limited.

It should be noted that, when sending the PPDU within a specific segment of 80 MHz, the first communication apparatus may send the U-SIG at a granularity of 20 MHz, and duplicate and transmit the U-SIG on a plurality of sub-channels whose bandwidths are 20 MHz, to ensure that the second communication apparatus receives the PPDU on one sub-channel whose bandwidth is 20 MHz, so that a resource unit on which the first communication apparatus actually transmits the PPDU may be obtained.

That is, U-SIG fields of the PPDU sent by the first communication apparatus within a same segment of 80 MHz are the same, so that it may be ensured that the second communication apparatus performs combined receiving on different 20 MHz sub-channels within the segment of 80 MHz. This improves reliability.

In addition, the U-SIG fields of the PPDU sent by the first communication apparatus within different segments of 80 MHz may also be the same, so that complexity of preparing a preamble by the first communication apparatus may be reduced. This simplifies a sending procedure.

It should be noted that in this embodiment of this application, one first communication apparatus is used as an example to describe a PPDU sending process. In an actual communication process, there may be a plurality of first communication apparatuses, and each of the plurality of first communication apparatuses may send a PPDU to the second communication apparatus based on related descriptions of sending the PPDU by the first communication apparatus in this embodiment of this application.

When there are a plurality of first communication apparatuses, U-SIG fields of the PPDU sent by each first communication apparatus within a same segment of 80 MHz are the same, and U-SIG fields of the PPDU sent by each first communication apparatus within different segments of 80 MHz are the same. Because there are a plurality of first communication apparatuses, for the second communication apparatus, U-SIG fields of the PPDU received within different segments of 80 MHz may be the same or may be different, and U-SIG fields of the PPDU received by the second communication apparatus within a same segment of 80 MHz are the same.

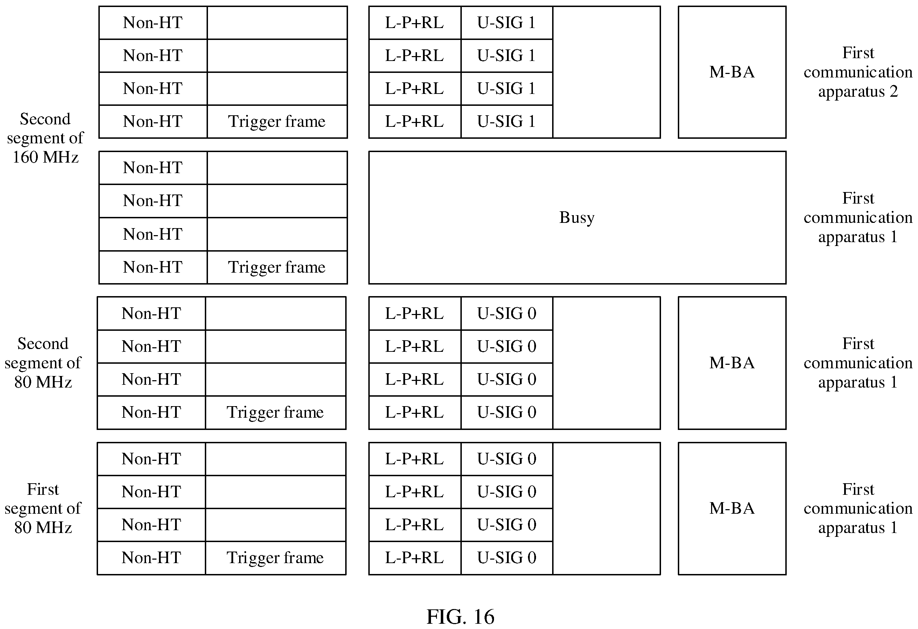

For example, as shown in FIG. 16, for example, the first communication apparatus includes a first communication apparatus 1 and a first communication apparatus 2. The second communication apparatus may send the trigger frame to the first communication apparatus 1 and the first communication apparatus 2. It is assumed that a first resource unit allocated by the second communication apparatus to the first communication apparatus 1 corresponds to three segments of 80 MHz, and a first resource unit allocated to the first communication apparatus 2 corresponds to one segment of 80 MHz. As shown in FIG. 16, when channel states corresponding to the first segment of 80 MHz, the second segment of 80 MHz, and the fourth segment of 80 MHz are idle, and a channel state corresponding to the third segment of 80 MHz is busy, the first communication apparatus 1 may send the PPDU on resource units corresponding to the first segment of 80 MHz and the second segment of 80 MHz. U-SIG fields of the PPDU sent by the first communication apparatus 1 on the resource units corresponding to the first segment of 80 MHz and the second segment of 80 MHz are the same, and are all U-SIG 0. The first communication apparatus 2 may send the PPDU on a resource unit corresponding to the fourth segment of 80 MHz. U-SIG fields of the PPDU sent by the first communication apparatus 2 on the resource unit corresponding to the fourth segment of 80 MHz are the same, and are all U-SIG 1. For the second communication apparatus, U-SIG fields of the PPDU received by the second communication apparatus with a same segment of 80 MHz are the same. U-SIG fields of the PPDU received on the first segment of 80 MHz and the second segment of 80 MHz are the same, and U-SIG fields of the PPDU received on the fourth segment of 80 MHz are different from the U-SIG fields of the PPDU received on the first segment of 80 MHz and the second segment of 80 MHz.

In addition, after receiving the PPDU, the second communication apparatus may further send a multiple user block acknowledgment frame (multiple user block acknowledge, M-BA) to the first communication apparatus 1 and the first communication apparatus 2.

Optionally, the first indication information is further for indicating a quantity of segments of 80 MHz corresponding to the resource unit for sending the PPDU.

For example, the first indication information is 2 bits. The first indication information may be set to 00, to indicate the first communication apparatus to send the PPDU within a segment of 80 MHz. The first indication information is set to 01, to indicate the first communication apparatus to send the PPDU within two segments of 80 MHz. The first indication information is set to 10, to indicate the first communication apparatus to send the PPDU within three segments of 80 MHz. The first indication information is set to 11, to indicate the first communication apparatus to send the PPDU within four segments of 80 MHz. It should be noted that this embodiment in this application does not specifically limit a correspondence between a value and an indication meaning of the first indication information, which is subject to descriptions that can be indicated.

It should be noted that, when the first indication information is further for indicating the quantity of segments of 80 MHz corresponding to the resource unit for sending the PPDU, the second communication apparatus may determine, based on the quantity of segments of 80 MHz corresponding to the first resource unit allocated to the first communication apparatus and the quantity indicated by the first indication information, whether the first communication apparatus sends the PPDU on all the resource units in the first resource units or the part of resource units in the first resource units.

For example, the quantity of segments of 80 MHz corresponding to the first resource unit allocated by the second communication apparatus to the first communication apparatus is 3. If the first indication information indicates that the quantity of segments of 80 MHz corresponding to the resource unit for sending the PPDU is 1 or 2, the second communication apparatus may determine that the first communication apparatus sends the PPDU on the part of resource units in the first resource unit. If the first indication information indicates that the quantity of segments of 80 MHz corresponding to the resource unit for sending the PPDU is 3, the second communication apparatus may determine that the first communication apparatus sends the PPDU on all the resource units in the first resource unit.

Optionally, the U-SIG field of the PPDU further includes one or both of the following: second indication information and third indication information.

The second indication information may be for indicating a modulation and coding scheme (modulation and coding scheme, MCS), and the MCS is determined based on the PPDU sent on the part of or all of the first resource unit.

When the first communication apparatus sends the PPDU on the part of resource units in the first resource unit, the MCS actually used by the first communication apparatus to send the PPDU may be different from an MCS allocated by the second communication apparatus to the first communication apparatus. In this case, the first communication apparatus may indicate, to the second communication apparatus by using the second indication information, the MCS actually used to send the PPDU.

The third indication information is for indicating transmit power, and the transmit power is determined based on the PPDU sent on the part of or all of the first resource unit.

When the first communication apparatus sends the PPDU on the part of resource units in the first resource unit, the transmit power actually used by the first communication apparatus to send the PPDU may be different from transmit power allocated by the second communication apparatus to the first communication apparatus. In this case, the first communication apparatus may indicate, to the second communication apparatus by using the third indication information, the transmit power actually used to send the PPDU.

Based on the foregoing related descriptions of sending the PPDU by the first communication apparatus, the first communication apparatus may send the PPDU on a sub-channel whose channel state is idle, to improve spectrum resource utilization. In addition, when the resource unit allocated to the first communication apparatus can meet the foregoing limitation on the first resource unit, a transmission mode of the first communication apparatus and the second communication apparatus may be simplified.

Step 603: The second communication apparatus receives the PPDU.

The second communication apparatus may receive PPDUs sent by a plurality of first communication apparatuses. In this embodiment of this application, an example in which the second communication apparatus receives the PPDU sent by the first communication apparatus is used to describe a specific process in which the second communication apparatus receives the PPDU. A process in which the second communication apparatus receives a PPDU sent by another first communication apparatus is similar to this process. Details are not described.

For example, when the PPDU does not include the first indication information, because the first communication apparatus may duplicate and send the U-SIG at a granularity of 20 MHz, the second communication apparatus may detect, on a sub-channel whose bandwidth is 20 MHz within each segment of 80 MHz of the first resource unit, whether the PPDU is received or whether the PPDU is correctly received. If the PPDU can be received or the PPDU can be correctly received on a sub-channel whose bandwidth is 20 MHz within a specific segment of 80 MHz, the second communication apparatus may receive the PPDU of the first communication apparatus within the segment of 80 MHz. If the PPDU is not received or the PPDU is incorrectly received on a sub-channel whose bandwidth is 20 MHz within a specific segment of 80 MHz, the second communication apparatus may not need to receive the PPDU of the first communication apparatus within the segment of 80 MHz.

In another example, when the PPDU includes the first indication information, if the first indication information is for indicating the first communication apparatus to send the PPDU on all the resource units in the first resource unit, the second communication apparatus may receive the PPDU on all the resource units in the first resource unit.

In still another example, when the PPDU includes the first indication information, if the first indication information is for indicating the first communication apparatus to send the PPDU on the part of resource units in the first resource unit, because the first communication apparatus may duplicate and send the U-SIG at a granularity of 20 MHz, the second communication apparatus may detect, on a sub-channel whose bandwidth is 20 MHz within each segment of 80 MHz of the first resource unit, whether the PPDU is received or whether the PPDU is correctly received. If the PPDU can be received or the PPDU can be correctly received on a sub-channel whose bandwidth is 20 MHz within a specific segment of 80 MHz, the second communication apparatus may receive the PPDU of the first communication apparatus within the segment of 80 MHz. If the PPDU is not received or the PPDU is incorrectly received on a sub-channel whose bandwidth is 20 MHz within a specific segment of 80 MHz, the second communication apparatus may not need to receive the PPDU of the first communication apparatus within the segment of 80 MHz.

In the foregoing examples, the second communication apparatus may sequentially detect, on a sub-channel whose bandwidth is 20 MHz within each segment of 80 MHz of the first resource unit, whether the PPDU is received or whether the PPDU is correctly received, or may simultaneously detect, on a sub-channel whose bandwidth is 20 MHz within each segment of 80 MHz of the first resource unit, whether the PPDU is received or whether the PPDU is correctly received. This is not limited.

It should be noted that when the first indication information is for indicating the first communication apparatus to send the PPDU on the part of resource units in the first resource unit, for example, the first resource unit corresponds to three segments of 80 MHz, assuming that the second communication apparatus has received the PPDU of the first communication apparatus within two segments of 80 MHz, the second communication apparatus may not need to receive the PPDU of the first communication apparatus within the other segment of 80 MHz.

In addition, when the first indication information is further for indicating the quantity of segments of 80 MHz corresponding to the resource unit for sending the PPDU, for example, the first resource unit corresponds to three segments of 80 MHz, assuming that the first indication information indicates that the quantity of segments of 80 MHz corresponding to the resource unit for sending the PPDU is 1, and the second communication apparatus has received the PPDU of the first communication apparatus within one segment of 80 MHz, the second communication apparatus may not need to receive the PPDU of the first communication apparatus within the other two segments of 80 MHz.

When there are a plurality of first communication apparatuses, U-SIG fields of the PPDU sent by each first communication apparatus within a same segment of 80 MHz are the same, and U-SIG fields of the PPDU sent by each first communication apparatus within different segments of 80 MHz are the same. Because there are a plurality of first communication apparatuses, for the second communication apparatus, the U-SUG fields of the PPDU received within different segments of 80 MHz may be the same or may be different.

According to the method shown in FIG. 6, the first communication apparatus may send the PPDU on the part of or all of the first resource unit when there is a sub-channel whose channel state is idle. This avoids a waste of spectrum resources and improves spectrum utilization. In addition, the first communication apparatus may further include the first indication information in the PPDU, to indicate whether the first communication apparatus transmits the PPDU on the part of or all of the first resource unit. In comparison with RU transmission indication information, this may reduce a quantity of bits and reduce signaling redundancy.

It should be noted that in this embodiment of this application, because the first communication apparatus may adaptively send the PPDU on the part of the first resource unit based on the channel state, the physical layer protocol data unit transmission method provided in this embodiment of this application may also be referred to as a simplified adapted/adaptive RU (simplified adapted/adaptive RU) transmission method, and the PPDU based on the trigger frame in this embodiment of this application may also be referred to as an adapted/adaptive TB PPDU (adapted/adaptive TB PPDU).

According to the method shown in FIG. 6 to FIG. 16, before sending the PPDU, the first communication apparatus may further prepare one or more physical layer service data units (PHY service data units, PSDUs) based on a capability of the first communication apparatus and the first resource unit, to send the PSDU on the resource unit that is determined by the first communication apparatus and that is for sending the PPDU.

For example, when the first resource unit is a resource unit whose quantity of tones is greater than 996, a quantity of physical layer service data units PSDUs in the PPDU sent on the part of or all of the first resource unit may be less than or equal to a first quantity, and the first quantity is a quantity of 996-tone resource units 996-tone RUs in the first resource unit.

For example, the first resource unit is a (2*996)-tone RU. The first quantity may be 2. The first communication apparatus may prepare, based on the first resource unit, one PSDU that can be transmitted on the 996-tone RU. When a channel state corresponding to one 996-tone RU in the first resource unit is idle, and a channel state corresponding to the other 996-tone RU is busy, the first communication apparatus may send the PSDU on the 996-tone RU whose channel state is idle. Alternatively, the first communication apparatus may prepare two PSDUs that can be transmitted on the 996-tone RU. When channel states corresponding to two 996-tone RUs in the first resource unit are both idle, the first communication apparatus may separately send the two PSDUs on the two 996-tone RUs.

It may be understood that the first communication apparatus may further prepare one PSDU that can be transmitted on the (2*996)-tone RU. When channel states corresponding to two 996-tone RUs in the first resource unit are both idle, the first communication apparatus may send the PSDU on the (2*996)-tone RU.

For another example, the first resource unit is a (4*996)-tone RU. The first quantity may be 4. The first communication apparatus may prepare, based on the first resource unit, one PSDU that can be transmitted on the 996-tone RU. When a channel state corresponding to one 996-tone RU in the first resource unit is idle, and channel states corresponding to the other three 996-tone RUs are busy, the first communication apparatus may send the PSDU on the 996-tone RU whose channel state is idle. Alternatively, the first communication apparatus may prepare two PSDUs that can be transmitted on the 996-tone RU. When channel states corresponding to two 996-tone RUs in the first resource unit are both idle, and channel states corresponding to the other two 996-tone RUs are both busy, the first communication apparatus may separately send the two PSDUs on the two 996-tone RUs whose channel states are both idle. Alternatively, the first communication apparatus may prepare three PSDUs that can be transmitted on the 996-tone RU. When channel states corresponding to three 996-tone RUs in the first resource unit are all idle, and a channel state corresponding to the other 996-tone RU is busy, the first communication apparatus may separately send the three PSDUs on the three 996-tone RUs whose channel states are idle. Alternatively, the first communication apparatus may prepare four PSDUs that can be transmitted on the 996-tone RU. When channel states corresponding to four 996-tone RUs in the first resource unit are all idle, the first communication apparatus may separately send the four PSDUs on the four 996-tone RUs whose channel states are idle.

It may be understood that the first communication apparatus may further prepare one PSDU that can be transmitted on the (4*996)-tone RU. When channel states corresponding to the four 996-tone RUs in the first resource unit are all idle, the first communication apparatus may send the PSDU on the (4*996)-tone RU.

In another example, when the first resource unit is the MRU, a quantity of PSDUs in the PPDU sent on all of the first resource unit may be equal to a second quantity.

The second quantity is a sum of a third quantity and a fourth quantity, the third quantity is a quantity of resource units whose quantity of tones is less than 996 in the MRU, and the fourth quantity is a quantity of 996-tone RUs in the MRU.

For example, the first resource unit is a (2*996+484)-tone MRU. The third quantity may be 1, and the fourth quantity may be 2. In other words, the second quantity may be 3. The first communication apparatus may prepare two PSDUs 1 that can be transmitted on the 996-tone RU, and prepare one PSDU 2 that can be transmitted on the 484-tone RU. When channel states corresponding to the first resource unit are all idle, the first communication apparatus may separately send the two PSDUs 1 on the two 996-tone RUs, and send the PSDU 2 on the 484-tone RU.

It may be understood that the first communication apparatus may further prepare one PSDU that can be transmitted on the (2*996+484)-tone MRU. When channel states corresponding to the first resource unit are all idle, the first communication apparatus may send the PSDU on the (2*996+484)-tone MRU.

For another example, the first resource unit is a (3*996)-tone MRU. The third quantity may be 0, and the fourth quantity may be 3. In other words, the second quantity may be 3. The first communication apparatus may prepare three PSDUs 1 that can be transmitted on the 996-tone RU. When channel states corresponding to the first resource unit are all idle, the first communication apparatus may separately send the three PSDUs on three 996-tone RUs.

It may be understood that the first communication apparatus may further prepare one PSDU that can be transmitted on a (3*996)-tone MRU. When channel states corresponding to the first resource unit are all idle, the first communication apparatus may send the PSDU on the (3*996)-tone MRU.

For another example, the first resource unit is a (3*996+484)-tone MRU. The third quantity may be 1, and the fourth quantity may be 3. In other words, the second quantity may be 4. The first communication apparatus may prepare three PSDUs 1 that can be transmitted on the 996-tone RU, and prepare one PSDU 2 that can be transmitted on the 484-tone RU. When channel states corresponding to the first resource unit are all idle, the first communication apparatus may separately send the three PSDUs 1 on the three 996-tone RUs, and send the PSDU 2 on the 484-tone RU.

It may be understood that the first communication apparatus may further prepare one PSDU that can be transmitted on a (3*996+484)-tone MRU. When channel states corresponding to the first resource unit are all idle, the first communication apparatus may send the PSDU on the (3*996+484)-tone MRU.

For another example, the first resource unit is a (996+484)-tone MRU. The third quantity may be 1, and the fourth quantity may be 1. In other words, the second quantity may be 2. The first communication apparatus may prepare one PSDU 1 that can be transmitted on the 996-tone RU, and prepare one PSDU 2 that can be transmitted on the 484-tone RU. When channel states corresponding to the first resource unit are all idle, the first communication apparatus may send the PSDU 1 on the 996-tone RU, and send the PSDU 2 on the 484-tone RU.

It may be understood that the first communication apparatus may further prepare one PSDU that can be transmitted on the (996+484)-tone MRU. When channel states corresponding to the first resource unit are all idle, the first communication apparatus may send the PSDU on the (996+484)-tone MRU.

For another example, the first resource unit is a (996+484+242)-tone MRU. The third quantity may be 2, and the fourth quantity may be 1. In other words, the second quantity may be 3. The first communication apparatus may prepare one PSDU 1 that can be transmitted on the 996-tone RU, one PSDU 2 that can be transmitted on the 484-tone RU, and one PSDU 3 that can be transmitted on the 242-tone RU. When channel states corresponding to the first resource unit are all idle, the first communication apparatus may send the PSDU 1 on the 996-tone RU, send the PSDU 2 on the 484-tone RU, and send the PSDU 3 on the 242-tone RU.

It may be understood that the first communication apparatus may further prepare one PSDU that can be transmitted on the (996+484+242)-tone MRU. When channel states corresponding to the first resource unit are all idle, the first communication apparatus may send the PSDU on the (996+484+242)-tone MRU.

In still another example, when the first resource unit is the MRU, a quantity of PSDUs in the PPDU sent on the part of the first resource unit may be less than or equal to a fourth quantity, and the fourth quantity is a quantity of 996-tone RUs in the MRU.

For example, the first resource unit is a (2*996+484)-tone MRU. The fourth quantity may be 2. The first communication apparatus may prepare one PSDU that can be transmitted on the 996-tone RU. When a channel state corresponding to one 996-tone RU in the first resource unit is idle, and a channel state corresponding to the other 996-tone RU is busy, the first communication apparatus may send the PSDU on the 996-tone RU whose channel state is idle. Alternatively, the first communication apparatus may prepare two PSDUs that can be transmitted on the 996-tone RU. When channel states corresponding to two 996-tone RUs in the first resource unit are idle, and a channel state corresponding to the 484-tone RU is busy, the first communication apparatus may separately send the two PSDUs on the two 996-tone RUs whose channel states are idle.

For another example, the first resource unit is a (3*996)-tone MRU. The fourth quantity may be 3. The first communication apparatus may prepare one PSDU that can be transmitted on the 996-tone RU. When a channel state corresponding to one 996-tone RU in the first resource unit is idle, and channel states corresponding to the other two 996-tone RUs are busy, the first communication apparatus may send the PSDU on the 996-tone RU whose channel state is idle. Alternatively, the first communication apparatus may prepare two PSDUs that can be transmitted on the 996-tone RU. When channel states corresponding to two 996-tone RUs in the first resource unit are idle, and a channel state corresponding to the other 996-tone RU is busy, the first communication apparatus may separately send the two PSDUs on the two 996-tone RUs whose channel states are idle. Alternatively, the first communication apparatus may prepare three PSDUs that can be transmitted on the 996-tone RU. When channel states corresponding to the three 996-tone RUs in the first resource unit are idle, the first communication apparatus may send the PSDUs on the three 996-tone RUs whose channel states are idle.

For another example, the first resource unit is a (3*996+484)-tone MRU. The fourth quantity may be 3. The first communication apparatus may prepare one PSDU that can be transmitted on the 996-tone RU. When a channel state corresponding to one 996-tone RU in the first resource unit is idle, and channel states corresponding to the other two 996-tone RUs are busy, the first communication apparatus may send the PSDU on the 996-tone RU whose channel state is idle. Alternatively, the first communication apparatus may prepare two PSDUs that can be transmitted on the 996-tone RU. When channel states corresponding to two 996-tone RUs in the first resource unit are idle, and a channel state corresponding to the other 996-tone RU is busy, the first communication apparatus may separately send the two PSDUs on the two 996-tone RUs whose channel states are idle. Alternatively, the first communication apparatus may prepare three PSDUs that can be transmitted on the 996-tone RU. When channel states corresponding to three 996-tone RUs in the first resource unit are idle, and a channel state corresponding to the other 484-tone RU is busy, the first communication apparatus may separately send the three PSDUs on the three 996-tone RUs whose channel states are idle.

For another example, the first resource unit is a (996+484)-tone MRU. The fourth quantity may be 1. The first communication apparatus may prepare one PSDU that can be transmitted on the 996-tone RU. When a channel state corresponding to the 996-tone RU in the first resource unit is idle, and a channel state corresponding to the 484-tone RU is busy, the first communication apparatus may send the PSDU on the 996-tone RU whose channel state is idle.

For another example, the first resource unit is a (996+484+242)-tone MRU. The fourth quantity may be 1. The first communication apparatus may prepare one PSDU that can be transmitted on the 996-tone RU. When a channel state corresponding to the 996-tone RU in the first resource unit is idle, and a channel state corresponding to the 484-tone RU or a channel state corresponding to the 242-tone RU is busy, the first communication apparatus may send the PSDU on the 996-tone RU whose channel state is idle.

In addition, based on the foregoing descriptions of the PPDU, the first communication apparatus may determine the PPDU in Manner 1 below: determining the PPDU based on a clear channel assessment result obtained after the trigger frame is received; or in Manner 2 below: determining the PPDU in advanced; or in Manner 3 below: determining the PPDU based on a clear channel assessment result obtained before the trigger frame is received and a clear channel assessment result obtained after the trigger frame is received.

In this embodiment of this application, the first communication apparatus is allowed/supported to send the PPDU on the part of resource units in the first resource unit. Therefore, after receiving the trigger frame, the first communication apparatus may determine the resource unit that can be for sending the PPDU, and generate the PPDU (for example, an EHT TB PPDU) that adapts to the resource unit that can be for sending the PPDU.

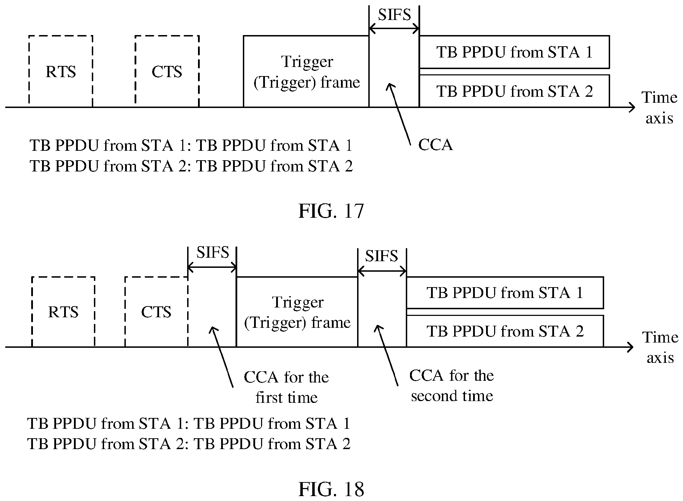

Manner 1: FIG. 17 is a schematic diagram of a time sequence of PPDU transmission according to an embodiment of this application. As shown in FIG. 17, the first communication apparatus may determine, by using the clear channel assessment (clear channel assessment, CCA) result obtained after the trigger frame is received, a channel state (idle or busy) corresponding to the first resource unit allocated to the first communication apparatus. Then, the resource unit that can be for sending the PPDU is determined based on the channel state corresponding to the first resource unit, and the corresponding PPDU is prepared (or generated) and sent.

Manner 2: Due to a hardware or software limitation of the first communication apparatus, after the first communication apparatus views the CCA result obtained after the trigger frame is received, the first communication apparatus may not be able to prepare, in a short interframe space (short interframe space, SIFS), the PPDU that adapts to the resource unit that can be for sending the PPDU. Therefore, the first communication apparatus may prepare in advance/generate a PPDU that occupies the first resource unit and a possible PPDU (herein, the possible PPDU refers to a PPDU, on the resource unit, that may be actually transmitted). In Manner 2, the first communication apparatus may simultaneously prepare PPDUs of a plurality of versions, and a requirement for a device capability of the first communication apparatus is high.

Manner 3: The first communication apparatus may perform determining based on the clear channel assessment result obtained before the trigger frame is received and the first resource unit that is indicated by the trigger frame and that is allocated to the first communication apparatus. FIG. 18 is a schematic diagram of another time sequence of PPDU transmission according to an embodiment of this application. As shown in FIG. 18, the first communication apparatus may determine, by using the CCA result of the first communication apparatus before the trigger frame is received, states (idle or busy) of all sub-channels on which the first resource unit allocated to the first communication apparatus is located. The first communication apparatus determines, for the first time based on the CCA result of the first communication apparatus before the trigger frame, whether a channel is busy or idle. In a process of receiving the trigger frame, if the second communication apparatus finds that the first resource unit is allocated to the first communication apparatus, the first communication apparatus may determine, based on the result of the busy or idle channel and the first resource unit, a size of the resource unit occupied by the to-be-replied PPDU. If all the sub-channels on which the first resource unit allocated by the second communication apparatus to the first communication apparatus is located are idle, the first resource unit is for preparing/generating the PPDU.

Optionally, if a part of sub-channels on which the first resource unit is located are idle, a resource unit available for transmitting the PPDU is selected from the part of idle sub-channels, and the PPDU is prepared/generated by using the resource unit available for transmitting the PPDU.

Optionally, if all the sub-channels on which the first resource unit is located are busy, or although a part of sub-channels are idle, no resource unit that can be for transmitting the PPDU can be matched on the idle sub-channels, the PPDU does not need to be prepared. Alternatively, if all the sub-channels on which the first resource unit is located are busy, or although a part of sub-channels are idle, no resource unit that can be for transmitting the PPDU can be matched on the idle sub-channels, the first communication apparatus selects, based on experience or an algorithm of the first communication apparatus, a protocol-supported RU/MRU to prepare/generate the PPDU, or prepares/generates the PPDU by using the first resource unit.

After receiving of the trigger frame ends, the first communication apparatus may perform CCA again, to determine whether the channel is busy or idle for the second time. If all the sub-channels occupied by the to-be-sent PPDU (or the prepared PPDU) are idle, the to-be-sent (or prepared) PPDU is transmitted. If at least one sub-channel in all the sub-channels of the to-be-sent PPDU (or the prepared PPDU) is busy, the PPDU is not transmitted.

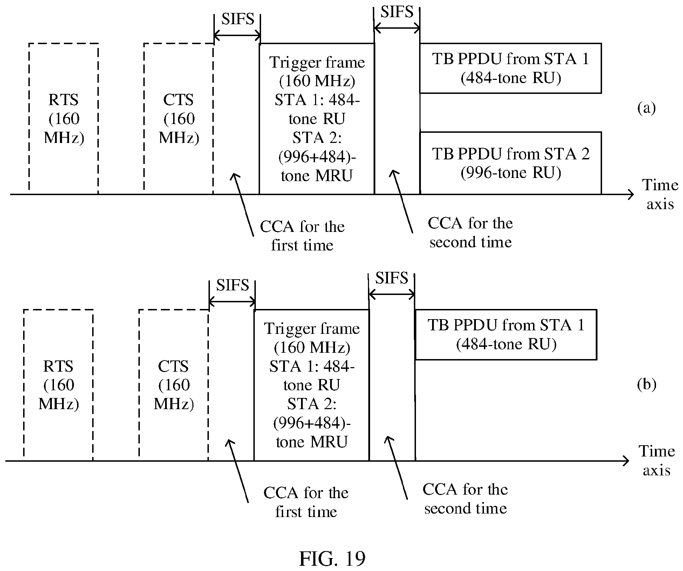

For example, FIG. 19 is a schematic diagram of still another time sequence of PPDU transmission according to an embodiment of this application. As shown in FIG. 19, the first resource unit allocated to a STA 2 is a (996+484)-tone MRU. If the STA 2 determines, based on the CCA result (namely, CCA for the first time) of the STA 2 before the trigger frame, that the 996-tone RU is idle and the 484-tone RU is busy, the STA 2 prepares/generates an EHT TB PPDU transmitted on the 996-tone RU. After receiving of the trigger frame ends, the STA 2 determines based on the CCA result (namely, CCA for the second time) of the STA 2 after the trigger frame. In this case, if the STA 2 determines that the 996-tone RU is still idle, the STA 2 transmits the PPDU (as shown in (a) in FIG. 19). In this case, if the STA 2 determines that a sub-channel on which the 996-tone RU is located is busy, the STA 2 does not transmit the PPDU (as shown in (b) in FIG. 19).

It may be learned that in Manner 3, after viewing the CCA result before the trigger frame, the first communication apparatus has sufficient time to prepare the PPDU. This means that the first communication apparatus does not need to prepare in advance the PPDU that occupies the first resource unit and the possible PPDU, that is, the first communication apparatus does not need to simultaneously prepare data of a plurality of versions. This reduces a requirement for the device capability. Further, the first communication apparatus determines, for the second time by viewing the CCA result after the trigger frame, whether the channel is busy or idle, and does not perform transmission when at least one sub-channel in all the sub-channels of the to-be-sent (or prepared) PPDU is busy, so that a possibility of collision can be reduced.

The foregoing describes the communication method in embodiments of this application. The following describes a communication apparatus in embodiments of this application. The communication apparatus in embodiments of this application includes a communication apparatus used at a transmit end and a communication apparatus used at a receive end. It should be understood that the communication apparatus used at the transmit end is the second device in the foregoing method, and has any function of the second device in the foregoing method. The communication apparatus used at the receive end is the first device in the foregoing method, and has any function of the first device in the foregoing method.

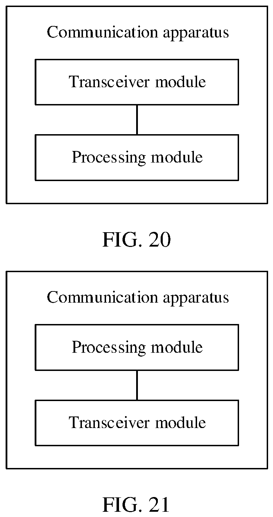

As shown in FIG. 20, the communication apparatus used at the receive end includes a transceiver module and a processing module.

The transceiver module is configured to receive a trigger frame, where the trigger frame is for indicating an allocated first resource unit, and the first resource unit is a resource unit whose quantity of tones is greater than 996; or the first resource unit is a multiple resource unit MRU, and the MRU includes at least one resource unit whose quantity of tones is greater than or equal to 996.

The processing module is configured to generate a PPDU.

The transceiver module is further configured to send the PPDU on a part of or all of the first resource unit.

The apparatus, used at the receive end, provided in embodiments of this application is the first communication apparatus in the foregoing method, and has any function of the first communication apparatus in the foregoing method. For specific details, refer to the foregoing method. Details are not described herein.

As shown in FIG. 21, the communication apparatus used at the transmit end includes a processing module and a transceiver module.

The processing module is configured to generate a trigger frame, where the trigger frame is for indicating an allocated first resource unit, and the first resource unit is a resource unit whose quantity of tones is greater than 996; or the first resource unit is a multiple resource unit MRU, and the MRU includes at least one resource unit whose quantity of tones is greater than or equal to 996.

The transceiver module is configured to send the trigger frame.

The transceiver module is further configured to receive a PPDU on a part of or all of the first resource unit.

The apparatus, used at the transmit end, provided in embodiments of this application is the second communication apparatus in the foregoing method, and has any function of the second communication apparatus in the foregoing method. For specific details, refer to the foregoing method. Details are not described herein.

The foregoing describes the communication apparatus used at the transmit end and the communication apparatus used at the receive end in embodiments of this application. The following describes possible product forms of the communication apparatus used at the transmit end and the communication apparatus used at the receive end. It should be understood that any form of product having a feature of the communication apparatus used at the receive end in FIG. 20 and any form of product having a feature of the communication apparatus used at the transmit end in FIG. 21 fall within the protection scope of this application. It should be further understood that the following descriptions are merely examples, and the product form of the communication apparatus used at the transmit end and the product form of the communication apparatus used at the receive end in embodiments of this application are not limited thereto.

As a possible product form, the communication apparatus used at the transmit end and the communication apparatus used at the receive end in embodiments of this application may be implemented by using a general bus architecture.

The communication apparatus used at the receive end includes a processor and a transceiver that is internally connected to and communicates with the processor. The transceiver is configured to receive a trigger frame, the processor is configured to generate a PPDU, and the transceiver is further configured to send the PPDU. Optionally, the communication apparatus used at the receive end may further include a memory. The memory is configured to store instructions executed by the processor.

The communication apparatus used at the transmit end includes a processor and a transceiver that is internally connected to and communicates with the processor. The processor is configured to generate a trigger frame, the transceiver is configured to send the trigger frame, and is further configured to receive a PPDU, and the processor is further configured to parse the PPDU. Optionally, the communication apparatus used at the transmit end may further include a memory. The memory is configured to store instructions executed by the processor.

As a possible product form, the communication apparatus used at the transmit end and the communication apparatus used at the receive end in embodiments of this application may be implemented through a general-purpose processor.

The general-purpose processor that implements the communication apparatus used at the receive end includes a processing circuit and an input/output interface that is internally connected to and communicates with the processing circuit. The input/output interface is configured to receive a trigger frame, the processing circuit is configured to generate a PPDU, and the input/output interface is configured to send the PPDU. Optionally, the general-purpose processor may further include a storage medium. The storage medium is configured to store instructions executed by the processing circuit.

The general-purpose processor that implements the communication apparatus used at the transmit end includes a processing circuit and an input/output interface that is internally connected to and communicates with the processing circuit. The processor is configured to generate a trigger frame, the input/output interface is configured to send the trigger frame, and is further configured to receive a PPDU, and the processing circuit is further configured to parse the PPDU. Optionally, the general-purpose processor may further include a storage medium. The storage medium is configured to store instructions executed by the processing circuit.

As a possible product form, the communication apparatus used at the transmit end and the communication apparatus used at the receive end in embodiments of this application may alternatively be implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

It should be understood that the resource allocation apparatus used at the transmit end and the resource allocation apparatus used at the receive end in the foregoing product forms respectively have any function of the transmit end and any function of the receive end in the foregoing method embodiments. Details are not described herein again.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve objectives of solutions of embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A physical layer protocol data unit transmission method, comprising:
receiving a trigger frame, wherein the trigger frame is for indicating an allocated first resource unit, and the first resource unit is a resource unit whose quantity of tones is greater than 996; or the first resource unit is a multiple resource unit MRU, and the MRU comprises at least one resource unit whose quantity of tones is greater than or equal to 996; and
sending a physical layer protocol data unit PPDU on a part of or all of the first resource unit.

2. The method according to claim 1, wherein
the PPDU comprises first indication information, and the first indication information is for indicating that the PPDU is sent on a part of resource units in the first resource unit, or the first indication information is for indicating that the PPDU is sent on all resource units in the first resource unit.

3. The method according to claim 1 or 2, wherein the sending a PPDU on a part of or all of the first resource unit comprises:
when the first resource unit is a resource unit whose quantity of tones is greater than 996, a quantity of physical layer service data units PSDUs in the PPDU sent on the part of or all of the first resource unit is less than or equal to a first quantity, and the first quantity is a quantity of 996-tone resource units 996-tone RUs in the first resource unit; or
when the first resource unit is the MRU, a quantity of PSDUs in the PPDU sent on all of the first resource unit is equal to a second quantity, the second quantity is a sum of a third quantity and a fourth quantity, the third quantity is a quantity of resource units whose quantity of tones is less than 996 in the MRU, and the fourth quantity is a quantity of 996-tone RUs in the MRU; or
when the first resource unit is the MRU, a quantity of PSDUs in the PPDU sent on the part of the first resource unit is less than or equal to a fourth quantity, and the fourth quantity is a quantity of 996-tone RUs in the MRU.

4. The method according to any one of claims 1 to 3, wherein
universal signal U-SIG fields of the PPDU within a same segment of 80 MHz are the same, and universal signal U-SIG fields of the PPDU within different segments of 80 MHz are the same.

5. A physical layer protocol data unit transmission method, comprising:
sending a trigger frame, wherein the trigger frame is for indicating an allocated first resource unit, and the first resource unit is a resource unit whose quantity of tones is greater than 996; or the first resource unit is a multiple resource unit MRU, and the MRU comprises at least one resource unit whose quantity of tones is greater than or equal to 996; and
receiving a physical layer protocol data unit PPDU on a part of or all of the first resource unit.

6. The method according to claim 5, wherein
the PPDU comprises first indication information, and the first indication information is for indicating that the PPDU is sent on a part of resource units in the first resource unit, or the first indication information is for indicating that the PPDU is sent on all resource units in the first resource unit.

7. The method according to claim 5 or 6, wherein the receiving a PPDU on a part of or all of the first resource unit comprises:
when the first resource unit is a resource unit whose quantity of tones is greater than 996, a quantity of physical layer service data units PSDUs in the PPDU received on the part of or all of the first resource unit is less than or equal to a first quantity, and the first quantity is a quantity of 996-tone resource units 996-tone RUs in the first resource unit; or
when the first resource unit is the MRU, a quantity of PSDUs in the PPDU received on all of the first resource unit is equal to a second quantity, the second quantity is a sum of a third quantity and a fourth quantity, the third quantity is a quantity of resource units whose quantity of tones is less than 996 in the MRU, and the fourth quantity is a quantity of 996-tone RUs in the MRU; or
when the first resource unit is the MRU, a quantity of PSDUs in the PPDU received on the part of the first resource unit is less than or equal to a fourth quantity, and the fourth quantity is a quantity of 996-tone RUs in the MRU.

8. The method according to any one of claims 5 to 7, wherein
universal signal U-SIG fields of the PPDU within a same segment of 80 MHz are the same, and universal signal U-SIG fields of the PPDU within different segments of 80 MHz are the same.

9. The method according to any one of claims 1 to 8, the method comprises:
when the part of resource units in the first resource unit are idle and a quantity of tones of the part of resource units is greater than or equal to 996, sending the PPDU on a resource unit whose quantity of tones is N multiplied by 996 in the part of resource units, wherein N is greater than or equal to 1.

10. The method according to any one of claims 2 to 4 and claims 6 to 9, wherein
the first indication information is a preset bit value; or
the first indication information is a default value of a special user information field in the trigger frame.

11. The method according to any one of claims 2 to 4 and claims 6 to 10, wherein
the first indication information is further for indicating a quantity of segments of 80 MHz corresponding to the resource unit for sending the PPDU.

12. The method according to any one of claims 2 to 4 and claims 6 to 11, wherein
the first indication information is located in the universal signal U-SIG field of the PPDU.

13. The method according to any one of claims 1 to 12, wherein
the universal signal U-SIG field of the PPDU further comprises one or both of the following: second indication information and third indication information;
the second indication information is for indicating a modulation and coding scheme MCS, and the MCS is determined based on the PPDU sent on the part of or all of the first resource unit; and
the third indication information is for indicating transmit power, and the transmit power is determined based on the PPDU sent on the part of or all of the first resource unit.

14. The method according to any one of claims 1 to 13, wherein
the trigger frame comprises fourth indication information, and the fourth indication information is for indicating that the PPDU is allowed to be sent on the part of resource units in the first resource unit.

15. The method according to claim 14, wherein
when the fourth indication information is for indicating that the PPDU is allowed to be sent on the part of resource units in the first resource unit, the first resource unit is not for scheduling multiple user multiple input multiple output MU-MIMO transmission.

16. A communication apparatus, comprising a unit configured to perform the physical layer protocol data unit transmission method according to any one of claims 1 to 15.

17. A communication apparatus, comprising a unit configured to perform the physical layer protocol data unit transmission method according to any one of claims 5 to 15.

18. A computer-readable storage medium, configured to store a computer program, wherein the computer program comprises instructions for performing the physical layer protocol data unit transmission method according to any one of claims 1 to 15.

19. A computer program product, wherein the computer program comprises instructions for performing the physical layer protocol data unit transmission method according to any one of claims 1 to 15.

20. A communication apparatus, wherein the communication apparatus comprises a processor and a transceiver that is internally connected to and communicates with the processor; and when the communication apparatus runs, the processor and the transceiver perform the physical layer protocol data unit transmission method according to any one of claims 1 to 15.

21. A chip, wherein a processing circuit is disposed on the chip, and the processing circuit is configured to perform the physical layer protocol data unit transmission method according to any one of claims 1 to 15.

22. A communication system, comprising:
the communication apparatus according to claim 16, and/or the communication apparatus according to claim 17.
